# EUROPEAN PATENT APPLICATION

(11) **EP 4 769 654 A2**
(43) Date of publication of application: **01.07.2026**
(21) Application number: 25227843.7
(22) Date of filing: 31.12.2025
(51) Int. Cl.: H01M 10/613, H01M 10/647, H01M 10/6554, H01M 10/6555, H01M 10/6556, H01M 10/6557, H01M 10/6563, H01M 10/6566, H01M 50/204

(54) **BATTERY PACK AND ELECTRICAL DEVICE**

(30) Priority: 31.12.2024 CN 202423320573 U; 31.12.2024 CN 202423318509 U; 13.01.2025 CN 202510047340
(71) Applicant: ZHEJIANG COSMX POWER CO., LTD., Jiaxing Zhejiang 314300 (CN); Zhejiang Cosmx Battery Co., Ltd., Jiaxing City, Zhejiang 314300 (CN)
(72) Inventor: MA, Ling, Jiaxing, 314300 (CN); ZHOU, Yian, Jiaxing, 314300 (CN); YE, Benyu, Jiaxing, 314300 (CN); WANG, Zhenlin, Jiaxing, 314300 (CN)
(74) Representative: Murgitroyd & Company

(57) **Abstract**

The present invention provides a battery pack and an electrical device. The battery pack includes a battery module, first heat dissipation structures, and a second heat dissipation structure. The battery module includes at least two battery cell assemblies arranged in a first direction. The battery cell assembly includes at least two battery cell units arranged in a second direction. The first heat dissipation structure is disposed between at least two adjacent battery cell units of each of the battery cell assemblies. the second heat dissipation structure is disposed between two adjacent battery cell assemblies, and the second heat dissipation structure has a second heat dissipation channel in communication with the outside.

## Description

### TECHNICAL FIELD

The present invention relates to the technical field of and in particular, to a battery pack and an electrical device.

### BACKGROUND

Battery packs have been widely used in electric vehicles, electric motorcycles, electric bicycles, unmanned aerial vehicles and other electric devices, to provide power support for the electric devices.

The battery pack specifically includes: a housing and a battery module. The battery module is located in the housing, and the battery module specifically includes a plurality of battery cells. The battery pack will generate heat during operation. If the temperature rise of the battery module is excessive and the heat cannot be dissipated in a timely manner, the battery pack will undergo thermal runaway, thereby resulting in incidents such as fire or explosion.

### SUMMARY

In view of this, embodiments of the present invention are directed to provide a battery pack, a battery pack system, and an electrical device to improve the heat dissipation performance and safety performance of the battery pack to a certain extent.

In a first aspect, the present invention provides a battery pack, including a battery module, first heat dissipation structures, and a second heat dissipation structure. The battery module includes at least two battery cell assemblies arranged in a first direction; and the battery cell assembly includes at least two battery cell units arranged in a second direction. The first heat dissipation structure is disposed between at least two adjacent battery cell units of each of the battery cell assemblies. The second heat dissipation structure is disposed between two adjacent battery cell assemblies, and the second heat dissipation structure has a second heat dissipation channel in communication with the outside.

Optionally, the first heat dissipation structure has a first heat dissipation channel in communication with the outside, and the first heat dissipation channel is in communication with the second heat dissipation channel.

Optionally, the second heat dissipation structure includes two brackets arranged in the first direction and connected to each other in a mating manner, where the brackets correspond to the battery cell assemblies on a one-to-one basis, and each of the brackets is connected to the first heat dissipation structure in the corresponding the battery cell assembly; and the two brackets jointly define the second heat dissipation channel.

Optionally, the bracket is provided with a ventilation opening. One end of the first heat dissipation channel is in communication with the outside, the other end of the first heat dissipation channel is in communication with the ventilation opening, and the ventilation opening is in communication with the second heat dissipation channel.

Optionally, the battery pack further includes a circuit board located on one side of the battery module in a third direction. A side of the bracket facing the circuit board is provided with a potting cavity opening toward the circuit board, and the bracket is provided with a potting hole in communication with the potting cavity. Further, the bracket includes a main portion and a first mating portion. The first mating portion is disposed on one side of the main portion in the first direction. The first mating portion includes an inclined wall and an end wall, one end of the inclined wall being connected to the main portion, the other end of the inclined wall extending obliquely in a direction away from the main portion, and the end wall being connected between the other end of the inclined wall and the main portion. The inclined wall, the end wall and the main portion jointly define the potting cavity, and the potting hole is provided in the end wall. The inclined walls of the two brackets fit against each other, and the end walls of the two brackets are oppositely disposed in the second direction.

Optionally, the bracket includes a main portion and a first mating portion. The first mating portion is disposed on one side of the main portion in the first direction. The first mating portion includes an inclined wall and an end wall, one end of the inclined wall being connected to the main portion, the other end of the inclined wall extending obliquely in a direction away from the main portion, and the end wall being connected between the other end of the inclined wall and the main portion. The inclined walls of the two brackets fit against each other, and the end walls of the two brackets are oppositely disposed in the second direction.

Optionally, the main portion is connected to the first heat dissipation structure; and/or the main portion is provided with a ventilation opening, one end of the first heat dissipation channel is in communication with the outside, the other end of the first heat dissipation channel is in communication with the ventilation opening, and the ventilation opening is in communication with the second heat dissipation channel; and/or the main portion is of a plate-like structure.

Optionally, the bracket includes two first mating portions disposed at two ends of the main portion in a third direction; projections of the inclined walls of the two first mating portions intersect in the third direction; further, the bracket further includes a second mating portion, the second mating portion and the first mating portions being disposed on the same side of the main portion in the first direction, and the second mating portion being located between the two first mating portions in the third direction; and the second mating portions of the two brackets fit against each other.

Optionally, the first heat dissipation structure includes a hollow heat dissipation plate, the heat dissipation plate being located between two adjacent battery cell units; and an inner cavity of the heat dissipation plate is formed as at least a part of the first heat dissipation channel. Further, the first heat dissipation structure further includes two end plates, the two end plates being respectively disposed at two ends of the heat dissipation plate in the first direction, and located outside the battery cell unit in the first direction. The end plate is provided with a through hole, and an end portion of the heat dissipation plate is inserted into the through hole.

Optionally, the battery pack includes a housing and a plurality of battery cell units disposed within the housing, the housing including a first side plate and a second side plate arranged oppositely in the second direction, and a third side plate and a fourth side plate arranged oppositely in the first direction perpendicular to the second direction. The second heat dissipation structure is a heat sink disposed within the housing, and the plurality of battery cell units are disposed on two sides of the heat sink, respectively. A plurality of first heat dissipation fins are provided in the heat sink, and the second heat dissipation channel is formed between adjacent first heat dissipation fins. The first side plate and the second side plate are provided with an opening in communication with the second heat dissipation channel. The first heat dissipation structure is formed by a plurality of second heat dissipation fins disposed outside the third side plate and the fourth side plate, and a first heat dissipation channel is formed between adjacent second heat dissipation fins; and an extension direction of the first heat dissipation channel is arranged at an angle to an extension direction of the second heat dissipation channel.

Optionally, the plurality of first heat dissipation fins are arranged side-by-side in a Z-direction perpendicular to an XY plane, each of the first heat dissipation fins lies in a plane parallel to the XY plane; and/or
the plurality of second heat dissipation fins are arranged side-by-side in the second direction, and each of the second heat dissipation fins lies in a plane parallel to a YZ plane.

Optionally, the at least two battery cell assemblies include a first battery cell assembly and a second battery cell assembly arranged side-by-side in the first direction. The heat sink is provided with a plurality of first heat dissipation fins arranged side-by-side on an inner side surface close to the first battery cell assembly, forming a first heat dissipation fin group. The heat sink is provided with a plurality of first heat dissipation fins arranged side-by-side on an inner side surface close to the second battery cell assembly group, forming a second heat dissipation fin group. A ventilation gap greater than zero exists between the first heat dissipation fin group and the second heat dissipation fin group.

Optionally, the battery pack includes a housing, the housing including a first side plate and a second side plate arranged oppositely in the second direction, and a third side plate and a fourth side plate arranged oppositely in the first direction perpendicular to the second direction. The at least two battery cell assemblies arranged side-by-side in the first direction are disposed within the housing, and each of the battery cell assemblies is provided with a plurality of battery cell units arranged side-by-side in the second direction. The second heat dissipation structure is a first heat dissipation gap provided between adjacent battery cell assemblies, and the first heat dissipation structure is a second heat dissipation gap provided between adjacent battery cell units. Inner walls of the third side plate and the fourth side plate are each provided with a plurality of Z-direction ridges arranged side-by-side in the second direction, a third groove is formed between adjacent Z-direction ridges, each side sealing edge of each of the battery cell units is located in one third groove, and a side sealing edge top R-corner of each of the battery cell units is located outside a top opening of the third groove.

Optionally, a distance between the side sealing edge top R-corner and the top opening of the third groove in the Z-direction parallel to an XY plane is defined as h, where h satisfies: 5 mm ≤ h ≤ 10 mm; further
the side sealing edge top R-corner is bonded to each of the inner walls of the third side plate and the fourth side plate via a thermally conductive structural adhesive.

In a second aspect, an embodiment of the present invention provides an electrical device, including a battery pack as described above.

The present invention provides a battery pack and an electrical device, in which a battery module of the battery pack includes at least two battery cell assemblies arranged in a first direction, the battery cell assembly including at least two battery cell units arranged in a second direction, and first heat dissipation structures and a second heat dissipation structure are provided. The first heat dissipation structure is disposed between at least two adjacent battery cell units, so that at least heat of the battery cell units can be transferred to an external environment through a first heat dissipation channel. In addition, the second heat dissipation structure is disposed between two adjacent battery cell assemblies, and the second heat dissipation structure has a second heat dissipation channel in communication with the outside, so that at least the heat of the battery cell units, and heat between adjacent battery cell assemblies can be transferred to the external environment through the second heat dissipation channel. This enables heat dissipation of the battery pack in multiple directions by means of the two heat dissipation structures, thereby enabling the heat of the battery module to be dissipated in a timely manner, reducing the temperature rise of the battery module, improving the heat dissipation effect of the battery pack, avoiding thermal runaway and other conditions in the battery pack to a certain extent, and thus improving the safety of the battery pack.

### BRIEF DESCRIPTION OF THE DRAWINGS

FIG. 1 is a structural schematic view of a battery pack according to an embodiment of the present invention.
FIG. 2 is a structural exploded view of a battery pack according to an embodiment of the present invention.
FIG. 3 is a structural schematic view of a housing body, a first heat dissipation structure, a second heat dissipation structure and a battery module of a battery pack according to an embodiment of the present invention.
FIG. 4 is a structural schematic top view corresponding to FIG. 3.
FIG. 5 is a structural enlarged view of part I in FIG. 4.
FIG. 6 is a structural enlarged view of part I in FIG. 5.
FIG. 7 is a structural enlarged view of part A in FIG. 4.
FIG. 8 is a first structural schematic view of a battery module, a first heat dissipation structure and a second heat dissipation structure of a battery pack according to an embodiment of the present invention.
FIG. 9 is a structural schematic view of a first heat dissipation structure of a battery pack according to an embodiment of the present invention.
FIG. 10 is a second structural schematic view of a battery module, a first heat dissipation structure and a second heat dissipation structure of a battery pack according to an embodiment of the present invention.
FIG. 11 is a structural enlarged view of part I in FIG. 10.
FIG. 12 is a structural schematic view of a second heat dissipation structure of a battery pack according to an embodiment of the present invention.
FIG. 13 is a structural schematic view of a bracket of a battery pack according to an embodiment of the present invention.
FIG. 14 is a partial structural schematic view of two brackets of a battery pack that are engaged together according to an embodiment of the present invention.
FIG. 15 is an isometric view of a battery pack according to an embodiment of the present application.
FIG. 16 is a front view of a battery pack according to an embodiment of the present application.
FIG. 17 is a left view of a battery pack according to an embodiment of the present application.
FIG. 18 is an external structural exploded view of a battery pack according to an embodiment of the present application.
FIG. 19 is a partial internal structural schematic view of a heat sink located inside the battery pack according to an embodiment of the present application.
FIG. 20 is a structural schematic exploded view of a battery cell and a housing of a battery pack according to an embodiment of the present application.
FIG. 21 is an enlarged view of part Q of FIG. 20.
FIG. 22 is a structural schematic view of the assembly of the battery cell and the housing shown in FIG. 20.
FIG. 23 is an enlarged view of part T of FIG. 22.
FIG. 24 is an enlarged view of part W of FIG. 22.
FIG. 25 is a top view of FIG. 22.
FIG. 26 is a structural schematic view of a first foam sandwiched between a plurality of battery cell units and a second foam provided at the bottom of the battery cell units according to an embodiment of the present application.

### Reference signs

1. battery module; 11. battery cell assembly; 111. battery cell unit; 112. battery cell casing; 113. side sealing edge; 2. first heat dissipation structure; 20. first heat dissipation channel; 21. heat dissipation plate; 211. heat dissipation fin; 22. end plate; 221. through hole; 3. second heat dissipation structure; 30. second heat dissipation channel; 31. bracket; 310. ventilation opening; 311. main portion; 312. first mating portion; 313. inclined wall; 314. end wall; 315. potting hole; 316. potting cavity; 317. second mating portion; 32. first engagement portion; 33. second engagement portion; 34. extension arm; 35. positioning groove; 4. circuit board; 5. first waterproof member; 6. second waterproof member; 7. first thermally conductive member; 8. second thermally conductive member; 100. housing; 101. housing body; 102. upper cover; 103. first side plate; 104. second side plate; 105. third side plate; 106. fourth side plate; 107. bottom plate; 108. first ventilation hole; 109. second ventilation hole;
10 - opening;
230 - second groove; 231 - second heat dissipation fin; 232 - boss; 2321. root portion; 2322. plate portion; 2323. end portion;
36 - spacer;
9 - heat sink; 90 - ventilation gap; 91 - first heat dissipation fin;
901 - first groove; 902 - fourth groove;
911 - first heat dissipation fin group; 912 - second heat dissipation fin group;
12 - vertical guide rail; 121 - bevelled surface;
1021 - top heat dissipation fin;
13 - electrically conductive connection portion;
14 - first foam; 15 - second foam;
16 - third groove; 1111 - cell body; 1112 - tab; 50 - clearance notch;
1113 - side sealing edge top R-corner; 160 - top opening.

### DETAILED DESCRIPTION OF THE EMBODIMENTS

Technical solutions in embodiments of the present invention are clearly and completely described below with reference to the drawings in the embodiments of the present invention. Apparently, the embodiments described are merely part rather than all of the embodiments of the present invention. All other embodiments obtained by those of ordinary skill in the art based on the embodiments of the present invention fall within the scope of protection of the present invention.

A battery pack includes: a housing, a battery module and a circuit board. The battery module and the circuit board are located inside the housing. The battery module may include a plurality of battery cells, which may be arranged in a preset direction. The circuit board is connected to the battery module, for example, for monitoring and managing the state of the battery module. For example, the state of the battery module may include current, voltage, temperature, etc.

The battery pack will generate heat during operation. If the heat is not dissipated in a timely manner, the battery pack may undergo an excessive temperature rise and thermal runaway, thereby resulting in incidents such as fire or explosion.

Based on this, the embodiments of the present invention provide a battery pack, a battery pack system, and an electrical device, in which a battery module includes at least two battery cell assemblies, the battery cell assembly including at least two battery cell units, a first heat dissipation structure is provided between two adjacent battery cell units, and a second heat dissipation structure is provided between two adjacent battery cell assemblies, such that heat dissipation channels of the first heat dissipation structure and the second heat dissipation structure are in communication with each other. The two heat dissipation structures enable heat dissipation of the battery pack, thereby preventing thermal runaway and other problems caused by excessive temperature rise of the battery pack, and improving the heat dissipation efficiency and safety of the battery pack.

The battery pack, the battery pack system and the electrical device provided by the present invention will be described in detail below by way of specific embodiments with reference to the accompanying drawings.

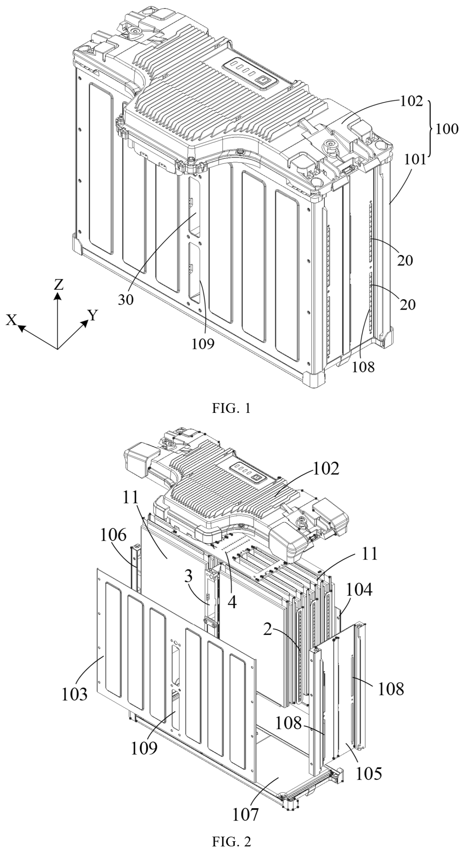

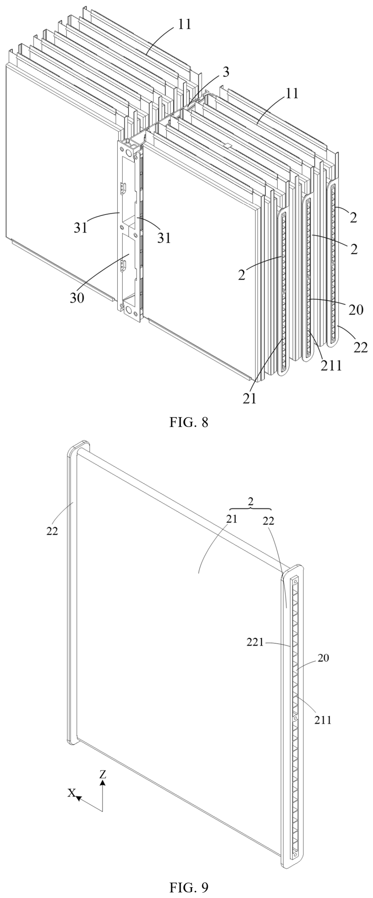

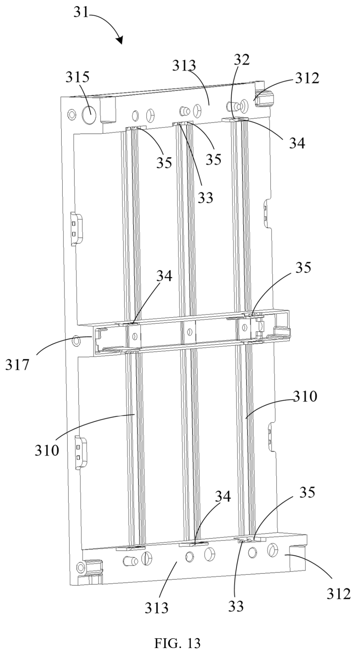

Referring to Figs. 1 to 14, an embodiment provides a battery pack, which may include: a battery module 1, a circuit board 4, first heat dissipation structures 2, and a second heat dissipation structure 3.

The battery module 1 includes at least two battery cell assemblies 11. The at least two battery cell assemblies 11 are arranged in a first direction. Each battery cell assembly 11 includes at least two battery cell units 111. The at least two battery cell units 111 are arranged in a second direction.

The circuit board 4 may be located on one side of the battery module 1 in a third direction. The circuit board 4 is electrically connected to the battery module 1 and, for example, can monitor and manage the current, voltage, etc. of the battery module 1.

Referring to Figs. 1 to 26, the first direction herein is, for example, the X-direction in the figures, which may specifically be a length direction of the battery pack. The second direction is, for example, the Y-direction in Fig. 1, which may specifically be a width direction of the battery pack. The third direction is, for example, the Z-direction in Fig. 1, which may specifically be a height direction of the battery pack.

The battery cell unit 111 may specifically include: a battery cell casing 112 and an electrode assembly located within the battery cell casing 112. The electrode assembly may specifically include a positive electrode plate, a negative electrode plate, and a separator. The positive electrode plate, the separator and the negative electrode plate are stacked in sequence. The positive electrode plate is provided with a positive tab, and the negative electrode plate is provided with a negative tab.

The battery cell casing 112 has a top sealing edge on one side in the third direction. By way of example, the positive tab and the negative tab may both extend from the top sealing edge and be connected to the circuit board 4. The battery cell casing 112 has side sealing edges 113 on two sides in the first direction.

The first heat dissipation structure 2 is disposed between at least two adjacent battery cell units 111 of each of the battery cell assemblies 11, and the first heat dissipation structure 2 has a first heat dissipation channel 20 in communication with the outside.

The second heat dissipation structure 3 is disposed between two adjacent battery cell assemblies 11, and the second heat dissipation structure 3 has a second heat dissipation channel 30 in communication with the outside. The first heat dissipation channel 20 is in communication with the second heat dissipation channel 30.

The outside here can be understood as the external space of the battery pack, and the first heat dissipation channel 20 and the second heat dissipation channel 30 can form air convection with the space outside the battery pack, and exchange heat with the external air. That is, heat generated by the components such as the battery cell units 111, the battery cell assemblies 11, and the circuit board 4 within the battery pack is dissipated to the external space of the battery pack through the first heat dissipation channel 20 and the second heat dissipation channel 30, thereby enabling heat dissipation of the battery pack, reducing the temperature rise of the battery pack, and improving the safety of the battery pack.

A battery cell assembly 11 including three battery cell units 111 arranged in the second direction will be described as an example. The three battery cell units 111 are sequentially designated as a first battery cell unit, a second battery cell unit and a third battery cell unit. The first heat dissipation structure 2 may be provided only between the first battery cell unit and the second battery cell unit, or the first heat dissipation structure 2 may be provided only between the second battery cell unit and the third battery cell unit, or the first heat dissipation structure 2 may be provided between the first battery cell unit and the second battery cell unit, and between the second battery cell unit and the third battery cell unit.

In a specific implementation, two, or three or more battery cell assemblies 11 may be provided. A battery module 1 including three battery cell assemblies 11 will be described as an example. The three battery cell assemblies 11 are sequentially designated as a first battery cell assembly, a second battery cell assembly and a third battery cell assembly. The second heat dissipation structure 3 may be provided only between the first battery cell assembly and the second battery cell assembly, or the second heat dissipation structure 3 may be provided only between the second battery cell assembly and the third battery cell assembly, or the second heat dissipation structure 3 may be provided between the first battery cell assembly and the second battery cell assembly, and between the second battery cell assembly and the third battery cell assembly.

The first heat dissipation channel 20 is in communication with the second heat dissipation channel 30. By way of example, in particular, at least part of the heat within the battery pack may be transferred directly to the outside of the battery pack through the first heat dissipation channel 20. For another example, at least part of the heat within the battery pack is transferred directly to the outside of the battery pack through the second heat dissipation channel 30. For still another example, the heat within the battery pack is directed through the first heat dissipation channel 20 and the second heat dissipation channel 30 to the outside of the battery pack, thereby enabling the heat dissipation of the battery pack, and improving the safety of the battery pack.

In a specific implementation, an air cooling device may also be provided, which may specifically be a fan and other devices capable of bringing air flow. The air cooling device is disposed in correspondence with the first heat dissipation channel 20; and/or the air cooling device is disposed in correspondence with the second heat dissipation channel 30.

For example, the air cooling device can bring air outside the battery pack into the first heat dissipation channel 20, to carry away heat generated by the battery cell units 111, etc., and the air flows out of the first heat dissipation channel 20 or the second heat dissipation channel 30 to the outside of the battery pack. For another example, the air cooling device can bring a gas outside the battery pack into the second heat dissipation channel 30, to carry heat away from the battery pack, and the gas flows from the other end of the second heat dissipation channel 30 or from the first heat dissipation channel 20 to the outside of the battery pack.

The air cooling device may be in a blow mode or in a suction mode.

By providing the air cooling device, the convection of the first heat dissipation channel 20 and/or the second heat dissipation channel 30 with the external air can be further accelerated to rapidly carry the heat away from the battery pack, enabling rapid heat dissipation of the battery pack.

Of course, in other implementations, heat dissipation of the battery pack may be achieved in a water cooling manner. That is, a cooling liquid, such as cooling water, is introduced into the first heat dissipation channel 20 and the second heat dissipation channel 30, and the cooling liquid is used to exchange heat with the battery cell unit 111, etc. to draw heat away from the battery pack, thereby enabling heat dissipation of the battery pack. By way of example, in order to avoid leakage of the cooling liquid, specifically, it is possible to communicate the first heat dissipation channel 20 and the second heat dissipation channel 30 only with the outside.

In a specific implementation, the battery pack may include a housing 100. The housing 100 specifically includes: a housing body 101, and an upper cover 102 covering the housing body 101. The battery module 1, the first heat dissipation structures 2, the second heat dissipation structure 3 and the circuit board 4 are located within the housing 100.

Referring to Figs. 1 and 2, the housing body 101 may specifically include: a first side plate 103, a second side plate 104, a third side plate 105, a fourth side plate 106, and a bottom plate 107.

The first side plate 103 and the second side plate 104 are oppositely disposed in the second direction, and the third side plate 105 and the fourth side plate 106 are oppositely disposed in the first direction. The third side plate 105 is connected to the first side plate 103 and the second side plate 104, respectively, and the fourth side plate 106 is connected to the first side plate 103 and the second side plate 104, respectively. The bottom plate 107 is connected to the bottom of the first side plate 103, the second side plate 104, the third side plate 105 and the fourth side plate 106. The first side plate 103, the second side plate 104, the third side plate 105, the fourth side plate 106 and the bottom plate 107 jointly enclose a receiving cavity. The battery module 1, the circuit board 4, the first heat dissipation structures 2 and the second heat dissipation structure 3 are located in the receiving cavity.

Specifically, the housing 100 may be provided with a ventilation hole. The ventilation hole is in communication with the first heat dissipation channel 20 and the second heat dissipation channel 30, and convection of the first heat dissipation channel 20 and the second heat dissipation channel 30 with the ambient air is enabled by means of the ventilation hole, thereby further improving the heat dissipation efficiency.

The housing 100 may be provided with a first ventilation hole 108 at a position corresponding to the first heat dissipation channel 20. For example, each of the third side plate 105 and the fourth side plate 106 is provided with a first ventilation hole 108 at a position corresponding to the first heat dissipation channel 20. The two first ventilation holes 108, for example, form an inlet and an outlet, respectively, of the first heat dissipation channel 20.

The housing 100 may be provided with a second ventilation hole 109 at a position corresponding to the second heat dissipation channel 30. For example, each of the first side plate 103 and the second side plate 104 is provided with a second ventilation hole 109 at a position corresponding to the second heat dissipation channel 30. The two second ventilation holes 109, for example, form an inlet and an outlet, respectively, of the second heat dissipation channel 30.

The convection of the first heat dissipation channel 20 and the second heat dissipation channel 30 with the ambient air is enabled by means of the first ventilation hole 108 and the second ventilation hole 109, thereby further improving the heat dissipation efficiency.

The first ventilation hole 108 and the second ventilation hole 109 may be bar-shaped holes, circular holes, oval holes, etc. In addition, one or more first ventilation holes 108 and one or more second ventilation holes 109 may be provided.

By way of example, an air cooling device may be provided at the first ventilation hole 108 and an air cooling device at the second ventilation hole 109 to further increase the air flow rate, thereby further improving the heat dissipation efficiency.

In the battery pack provided by this embodiment, the battery module 1 includes at least two battery cell assemblies 11 arranged in a first direction, the battery cell assembly 11 including at least two battery cell units 111 arranged in a second direction, and first heat dissipation structures 2 and a second heat dissipation structure 3 are provided such that the first heat dissipation structure 2 is disposed between at least two adjacent battery cell units 111. Since the first heat dissipation structure 2 has a first heat dissipation channel 20 in communication with the outside, at least heat of the battery cell units 111 can be transferred to an external environment through the first heat dissipation channel 20. In addition, the second heat dissipation structure 3 is disposed between two adjacent battery cell assemblies 11. Since the second heat dissipation structure 3 has a second heat dissipation channel 30 in communication with the outside, at least the heat of the battery cell units 111, and heat between adjacent battery cell assemblies 11 can be transferred to the outside environment through the second heat dissipation channel 30. Moreover, the first heat dissipation channel 20 is in communication with the second heat dissipation channel 30. This enables heat dissipation of the battery pack in multiple directions by means of the two heat dissipation structures, thereby enabling the heat of the battery module 1 to be dissipated in a timely manner, reducing the temperature rise of the battery module 1, improving the heat dissipation effect of the battery pack, avoiding thermal runaway and other conditions in the battery pack to a certain extent, and thus improving the safety of the battery pack.

Furthermore, since the first heat dissipation channel 20 is in communication with the second heat dissipation channel 30, when one of the first heat dissipation channel 20 and the second heat dissipation channel 30 becomes unintentionally clogged, heat is transferred to the external space of the battery pack through the other of the first heat dissipation channel 20 and the second heat dissipation channel 30, thereby ensuring the timely and effective heat dissipation of the battery module 1, and further ensuring the heat dissipation effect.

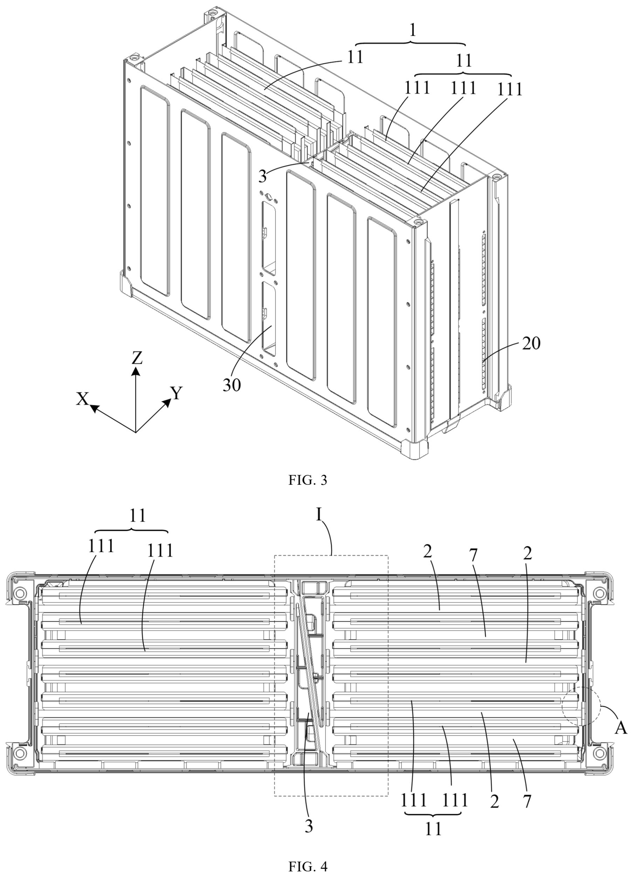

Referring to Figs. 4 to 12, in some embodiments, the second heat dissipation structure 3 includes two brackets 31. The two brackets 31 are arranged in the first direction, and are connected to each other in a mating manner. The brackets 31 correspond to the battery cell assemblies 11 on a one-to-one basis, and each of the brackets 31 is connected to the first heat dissipation structure 2 in the corresponding the battery cell assembly 11. The two brackets 31 jointly define the second heat dissipation channel 30.

By configuring the second heat dissipation structure 3 as two brackets 31, during assembly, it is possible to first place the first heat dissipation structure 2 in each battery cell assembly 11 such that the first heat dissipation structure 2 is located between two adjacent battery cell units 111, then connect each bracket 31 to the first heat dissipation structure 2 in the corresponding battery cell assembly 11, and then to connect the two brackets 31 to each other in a mating manner, thereby improving the convenience of assembly of the battery pack.

That is, by configuring the second heat dissipation structure 3 as above, the convenience of assembly of the battery pack is improved while enabling the heat dissipation of the battery pack.

In addition, during manufacturing, the two brackets 31 can be manufactured using a single mould. This simplifies the manufacturing process and reduces manufacturing costs.

The bracket 31 may specifically be an aluminium bracket or a copper bracket to improve the heat transfer performance of the bracket 31 and thus improve the heat dissipation efficiency of the battery pack.

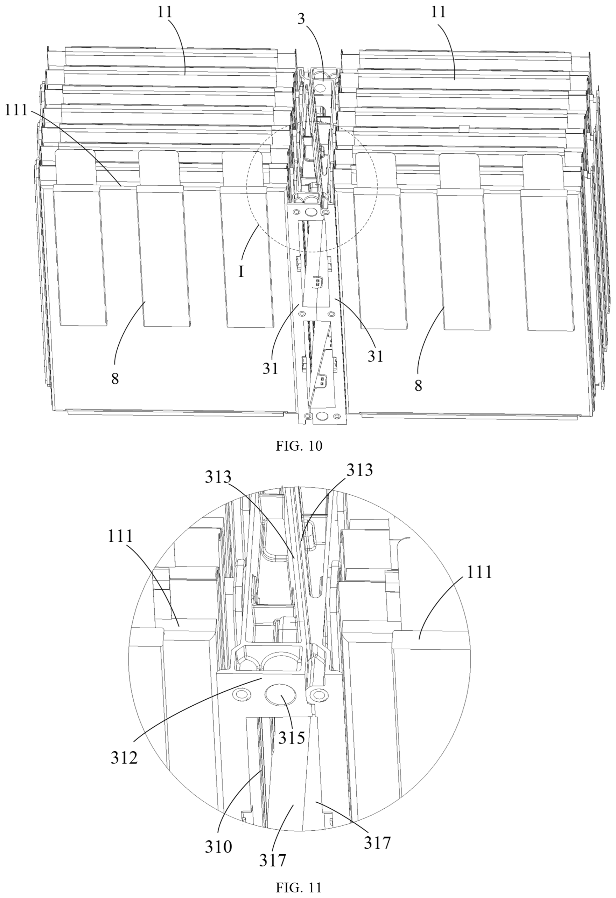

In some embodiments, referring to Figs. 10-12, the bracket 31 is provided with a ventilation opening 310. One end of the first heat dissipation channel 20 is in communication with the outside, the other end of the first heat dissipation channel 20 is in communication with the ventilation opening 310, and the ventilation opening 310 is in communication with the second heat dissipation channel 30.

That is, the first heat dissipation channel 20 is in communication with the second heat dissipation channel 30 by means of the ventilation opening 310, so that the structure is simple and convenient to design, and the heat dissipation path is short, enabling heat to be rapidly removed to the outside of the battery pack.

Specifically, communication between the respective first heat dissipation structures 2 of two adjacent battery cell assemblies 11 can also be achieved by means of the ventilation opening 310. Referring to Fig. 10, for example, the first heat dissipation channel 20 of the first heat dissipation structure 2 on the right side is in communication with the first heat dissipation channel 20 of the first heat dissipation structure 2 on the left side by means of the ventilation opening 310. That is, convection can also be achieved between the first heat dissipation channels on the left and right sides, thereby further improving the heat dissipation efficiency of the battery pack.

In some embodiments, a side of the bracket 31 facing the circuit board is provided with a potting cavity 316 opening toward the circuit board, and the bracket 31 is provided with a potting hole 315 in communication with the potting cavity 316.

After the battery module 1, the circuit board 4, the first heat dissipation structures 2 and the second heat dissipation structure 3 are mounted together, this overall structure is inverted, a potting compound is then poured into the potting hole 315, and the potting compound enters the potting cavity 316 and then flows to the circuit board 4, thereby achieving the potting and sealing of the circuit board 4.

By providing the potting hole 315 in the bracket 31, the structure of the bracket 31 itself is effectively utilized, so that the bracket 31 serves the functions of both heat dissipation and potting. Specifically, the potting cavity 316 provides guidance for the flow of the potting compound, avoiding the out-flow of the potting compound to a certain extent, and improving the convenience of potting.

In some embodiments, the bracket 31 includes a main portion 311 and a first mating portion 312. The first mating portion 312 is disposed on one side of the main portion 311 in the first direction.

The first mating portion 312 includes an inclined wall 313 and an end wall 314. One end of the inclined wall 313 is connected to the main portion 311, the other end of the inclined wall 313 extends obliquely in a direction away from the main portion 311, and the end wall 314 is connected between the other end of the inclined wall 313 and the main portion 311. The inclined walls 313 of the two brackets 31 fit against each other, and the end walls 314 of the two brackets 31 are oppositely disposed in the second direction.

Such an arrangement serves the function of guiding the mating to a certain extent, making the mating of the two brackets 31 more convenient.

The inclined wall 313, the end wall 314 and the main portion 311 jointly define the potting cavity 316, and the potting hole 315 is provided in the end wall 314. By way of example, the inclined wall 313, the end wall 314, and the main portion 311 jointly enclose a generally triangular structure.

Such an arrangement makes the area of the end wall 314 relatively large, so that the provision of the potting hole 315 in the end wall 314 facilitates the formation of a relatively large potting hole 315, thereby helping ensure the flow rate and velocity of the potting compound, and improving the potting efficiency. Moreover, the inclined arrangement of the inclined wall 313 also serves to guide the flow of the potting compound to a certain extent, further improving the potting efficiency and the convenience of potting.

In some embodiments, the main portion 311 is connected to the first heat dissipation structure 2. By connecting the main portion 311 to the first heat dissipation structure 2, the ease of connection is improved. By way of example, the main portion 311 is provided with a first mounting hole, the first heat dissipation structure 2 is provided with a second mounting hole, and the main portion 311 is connected to the first heat dissipation structure 2 via a screw, a bolt or the like that is inserted into the first mounting hole and the second mounting hole. Alternatively, the main portion 311 is connected to the first heat dissipation structure 2 by means of snap engagement.

The main portion 311 may be configured as a plate-like structure, so that the connection of the main portion 311 to the first heat dissipation structure 2 is facilitated while enabling the heat dissipation. In addition, the area of the second heat dissipation channel 30 can be increased, and the heat dissipation efficiency can be improved, with the space between two adjacent battery cell assemblies 11 being constant.

Referring to Figs. 10 to 13, in some embodiments, the bracket 31 includes two first mating portions 312. The two first mating portions 312 are disposed at two ends of the main portion 311 in the third direction.

Projections of the inclined walls 313 of the two first mating portions 312 of the bracket 31 may intersect in the third direction.

Such an arrangement allows the distribution of the centre of gravity of the bracket 31 to be uniform, and the stability of the bracket 31 is improved while improving the heat dissipation effect, thereby improving the stability of the entire second heat dissipation structure 3 and the stability of the battery pack.

The first mating portions 312 of the two brackets 31 correspond to each other on a one-to-one basis, and the corresponding two first mating portions 312 fit against each other. This further improves the overall stability of the second heat dissipation structure 3.

In some embodiments, the first mating portion 312 may be integrally formed with the main portion 311, so as to make the manufacturing and assembly more convenient and increase the structural strength of the entire bracket 31.

Further, still referring to Figs. 10 to 13, the bracket 31 may further include a second mating portion 317. The second mating portion 317 and the first mating portions 312 are disposed on the same side of the main portion 311 in the first direction, and the second mating portion 317 is located between the two first mating portions 312 in the third direction.

By providing the second mating portion 317, the structural strength of the bracket 31 is further increased, and the structural strength of the second heat dissipation structure 3 is thus increased.

The second mating portions 317 of the two brackets 31 fit against each other. Such an arrangement further improves the fitting stability of the two brackets 31, thereby further improving the overall stability of the second heat dissipation structure 3. Moreover, the second mating portions 317 of the two brackets 31 can thus divide a second heat dissipation duct into two sub-ducts arranged in the third direction, so that a certain guiding effect can be provided on the direction of flow of the air, and the heat exchange contact area is increased, thereby further improving the heat dissipation efficiency.

In some embodiments, the second mating portion 317 may be integrally formed with the main portion 311, so as to make the manufacturing and assembly more convenient and increase the structural strength of the entire bracket 31.

Furthermore, by forming both the first mating portion 312 and the second mating portion 317 integrally with the main portion 311, it is possible to manufacture the bracket 31 including the main portion 311, the first mating portion 312 and the second mating portion 317 using only a single mould. This simplifies the manufacturing process and reduces manufacturing costs.

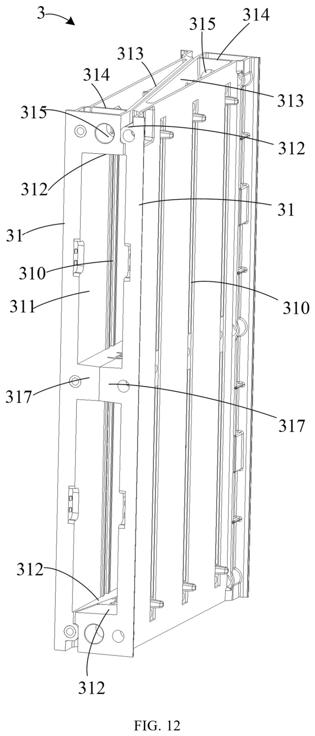

Referring to Figs. 12 to 14, the bracket 31 is provided with a first engagement portion 32 and a second engagement portion 33. The first engagement portion 32 and the second engagement portion 33 are spaced apart on the bracket 31. The first engagement portion 32 of one of the brackets 31 corresponds, on a one-to-one basis, to, and matches and engages with the second engagement portion 33 of the other of the brackets 31.

This allows the two brackets 31 to mate together by fitting the first engagement portion 32 with the second engagement portion 33, thereby further improving the convenience of assembly.

By way of example, for one of the brackets 31, the first engagement portion 32 and the second engagement portion 33 on the bracket 31 may for example be spaced apart in the second direction.

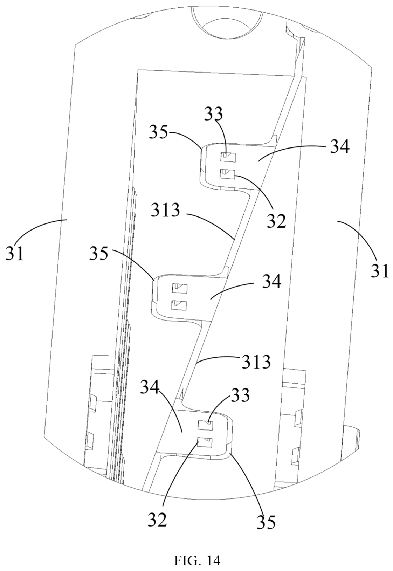

By way of example, the first engagement portion 32 and the second engagement portion 33 may be provided on the first mating portion 312 or on the second mating portion 317, or each of the first mating portion 312 and the second mating portion 317 is provided with the first engagement portion 32 and the second engagement portion 33. Referring to Figs. 12 and 14, when the two brackets 31 mate with each other, the first engagement portion 32 of the left bracket 31 matches and mates with the second engagement portion 33 of the right bracket 31, and the second engagement portion 33 of the left bracket 31 matches and mates with the first engagement portion 32 of the right bracket 31.

By way of example, during the assembly of the battery pack, the first heat dissipation structure 2 is placed between two adjacent battery cell units 111 of each battery cell assembly 11, each bracket 31 is then connected to the first heat dissipation structure 2 in the corresponding battery cell assembly 11, and the two brackets 31 then mate with each other so that the two brackets 31 are engaged and connected together.

This embodiment makes the assembly of the battery pack more convenient by configuring the second heat dissipation structure 3 as two brackets 31. Such an arrangement in this embodiment makes the connection of the bracket 31 to the first heat dissipation structure 2 more convenient than a solution in which the second heat dissipation structure 3 is configured as an integral bracket structure.

Specifically, one of the first engagement portion 32 and the second engagement portion 33 may be a snap, and the other of the first engagement portion 32 and the second engagement portion 33 may be a slot that matches and engages with the snap. When the two brackets 31 fit against each other, the snap is engaged exactly in the corresponding slot, enabling the two brackets 31 to engage with each other, so that the connection is easy and reliable.

In some embodiments, the first engagement portion 32 and the second engagement portion 33 may be integrally formed with the bracket 31.

This can increase the structural strength of the entire bracket 31, and therefore the structural strength of the entire second heat dissipation structure 3.

Referring to Figs. 10 to 14, the bracket 31 is provided with an extension arm 34 extending in a direction away from the corresponding battery cell assembly 11, and a positioning groove 35 into which the extension arm 34 is engaged. The extension arm 34 of one of the brackets 31 matches with and is connected to the positioning groove 35 of the other of the brackets 31, the first engagement portion 32 is provided on the extension arm 34, and the second engagement portion 33 is provided in the positioning groove 35.

That is, when the two brackets 31 mate together, the extension arm 34 is located exactly in the positioning groove 35, achieving a first positioning; at the same time, the first engagement portion 32 on the extension arm 34 matches and engages with the second engagement portion 33 in the positioning groove 35, achieving a second positioning, thereby improving the engagement stability of the two brackets 31, and providing a guarantee for good heat dissipation of the battery pack.

By way of example, the first engagement portion 32 is a slot, and the second engagement portion 33 is a snap. The slot is provided in the extension arm 34, and the snap is provided within the positioning groove 35.

In some embodiments, for either bracket 31, at least two first engagement portions 32 and at least two second engagement portions 33 are provided.

This enables the positioning of the bracket 31 from multiple positions, further improving the engagement stability of the two brackets 31 and the structural stability of the battery pack.

For example, the first mating portion 312 of one of the brackets 31 is provided with two extension arms 34 and one positioning groove 35, and the first mating portion 312 of the other bracket 31 is provided with two positioning grooves 35 and one extension arm 34.

Referring to Figs. 2 to 9, the first heat dissipation structure 2 includes a hollow heat dissipation plate 21. The heat dissipation plate 21 is located between two adjacent battery cell units 111. An inner cavity of the heat dissipation plate 21 is formed as at least a part of the first heat dissipation channel 20.

This allows heat of the battery cell unit 111 to be transferred to the outside through the first heat dissipation channel 20 on the heat dissipation plate 21, thereby facilitating heat exchange with the external air, and enabling heat dissipation of the battery cell unit 111, etc.

By way of example, the heat dissipation plate 21 is an aluminium plate. This can further improve the heat dissipation effect.

In some embodiments, the heat dissipation plate 21 is in thermal contact with an outer surface of the battery cell unit 111.

In this way, heat of the battery cell unit 111 can be transferred directly to the heat dissipation plate 21, thereby facilitating heat exchange with a cooling medium entering the first heat dissipation channel 20 to transfer the heat to the outside by means of the heat dissipation plate 21, so that the cooling of the battery cell unit 111 is achieved, and the heat dissipation efficiency is further improved.

The thermal contact here may specifically be the direct contact of the heat dissipation plate 21 with the outer surface of the battery cell unit 111. Alternatively, a thermally conductive structure such as a thermally conductive foam or a thermally conductive adhesive may be provided between the heat dissipation plate 21 and the outer surface of the battery cell unit 111, to transfer the heat of the battery cell unit 111 to the heat dissipation plate 21.

In some embodiments, a heat dissipation fin 211 is provided in the inner cavity of the heat dissipation plate 21, as shown in Figs. 1, 8 and 9. This can increase the contact area of the heat dissipation plate 21 with the cooling medium passing through the first heat dissipation channel 20, thereby improving the heat dissipation efficiency.

Specifically, at least two heat dissipation fins 211 may be provided. The at least two heat dissipation fins 211 are arranged at intervals in the third direction. This can further increase the contact area of the heat dissipation plate 21 with the cooling medium, thereby further improving the heat dissipation efficiency.

The heat dissipation fins 211 may be configured to be integrally formed with the heat dissipation plate 21. This make the manufacturing more convenient and increase the structural strength of the entire first heat dissipation structure 2.

Referring to Figs. 4 to 9, the first heat dissipation structure 2 further includes two end plates 22. The two end plates 22 are respectively disposed at two ends of the heat dissipation plate 21 in the first direction, and the two end plates 22 are located outside the battery cell unit 111 in the first direction. The end plate 22 is provided with a through hole 221, and an end portion of the heat dissipation plate 21 is inserted into the through hole 221.

Such an arrangement allows the two end plates 22 to serve the function of limiting the entire first heat dissipation structure 2 in the first direction, improving the stability of the heat dissipation plate 21, and can also enable the connection with the second heat dissipation structure 3 and the housing 100 by means of the end plates 22, making the connection more convenient. For example, one of the end plates 22 is connected to the side plate of the housing 100, and the other end plate 22 is connected to the bracket 31. By way of example, the end plate 22 and the main portion 311 of the bracket 31 are each provided with a mounting hole, and the end plate 22 may be specifically connected to the main portion 311 of the bracket 31 via a bolt inserted into the corresponding mounting holes. By way of example, the end plate 22 and the side plate of the housing 100 are each provided with a mounting hole, and the end plate 22 is connected to the side plate of the housing 100 via a bolt inserted into the corresponding mounting holes.

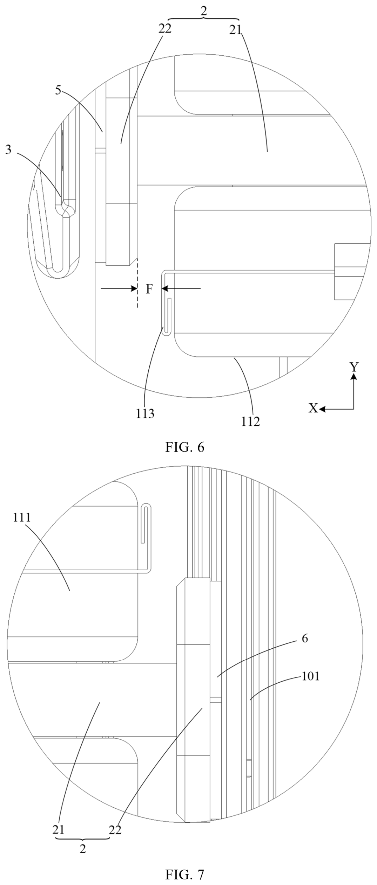

Referring to Fig. 6, in some embodiments, the end plate 22 has a spacing F in the first direction from the corresponding side sealing edge 113.

In this way, for example, when the battery pack is subjected to an impact, since there is a spacing between the end plate 22 and the side sealing edge 113, the spacing can provide a cushioning function when the battery pack is subjected to the impact, effectively protecting the battery cell unit 111, and preventing damage, explosion or other accidents of the battery cell unit 111 from occurring due to the impact, thereby improving the safety of the battery pack. Such an arrangement can also prevent the side sealing edge 113 from making contact with the end plate 22, etc. and causing short circuits, etc. to a certain extent.

Specifically, the spacing F between the end plate 22 and the corresponding side sealing edge 113 in the first direction may be set to be not less than 1.5 mm.

By way of example, the spacing F may specifically be 1.5 mm, 1.55 mm, 1.6 mm, 1.65 mm, 1.7 mm, 1.75 mm, or 1.8 mm.

Such a setting can further improve the impact cushioning effect, to enable the protection of the battery cell unit 111, thereby further preventing the side sealing edge 113 from making contact with the end plate 22, etc.

Still referring to Fig. 6, in some embodiments, a first waterproof member 5 is provided between the end plate 22 of the heat dissipation plate 21 at the end close to the second heat dissipation structure 3 and the second heat dissipation structure 3.

By way of example, the first waterproof member 5 may be sandwiched between the end plate 22 and the main portion 311.

By providing the first waterproof member 5, it is possible to prevent water and other impurities from entering the battery cell unit 111 through the space between the end plate 22 and the second heat dissipation structure 3, and to avoid the risks of corrosion, short circuits, etc. caused by the battery cell unit 111 being exposed to water, thereby protecting the battery cell unit 111 and improving the safety of the battery pack.

The first waterproof member 5 may for example be of an elastic material, which, by virtue of its elastic cushioning effect, can compensate for the assembly error between the end plate 22 and the second heat dissipation structure 3 while improving the sealing and waterproofing effect.

The first waterproof member 5 may specifically be a thermally conductive foam. In this way, while improve the sealing performance between the end plate 22 and the second heat dissipation structure 3, the thermal conductivity between the end plate 22 and the second heat dissipation structure 3 can also be increased, so that the overall heat dissipation effect of the battery pack is improved.

Referring to Fig. 7, in some embodiments, a second waterproof member 6 is provided between the end plate 22 of the heat dissipation plate 21 at the end away from the second heat dissipation structure 3 and the housing 100.

By providing the second waterproof member 6, it is possible to prevent water and other impurities from entering the battery cell unit 111 through the space between the end plate 22 and the side plate of the housing 100, and to avoid the risks of corrosion, short circuits, etc. caused by the battery cell unit 111 being exposed to water, thereby protecting the battery cell unit 111 and improving the safety of the battery pack.

By way of example, when the end plate 22 and the side plate of the housing 100 are connected together via a fastener such as a bolt or a screw, the second waterproof member 6 may be sandwiched between the end plate 22 and the side plate of the housing 100.

The second waterproof member 6 may for example be of an elastic material, which, by virtue of its elastic cushioning effect, can better match a gap between the end plate 22 and the housing 100 and compensate for the assembly error while improving the sealing and waterproofing effect.

The second waterproof member 6 may specifically be a thermally conductive foam. In this way, while improve the sealing performance between the end plate 22 and the housing 100, the thermal conductivity between the end plate 22 and the housing 100 can also be increased, so that heat is transferred to the housing 100 and thereby dissipated to the outside of the battery pack, and the overall heat dissipation effect of the battery pack is improved.

Of course, in other implementations, the first waterproof member 5 and the second waterproof member 6 may also be rubber sealing rings or the like.

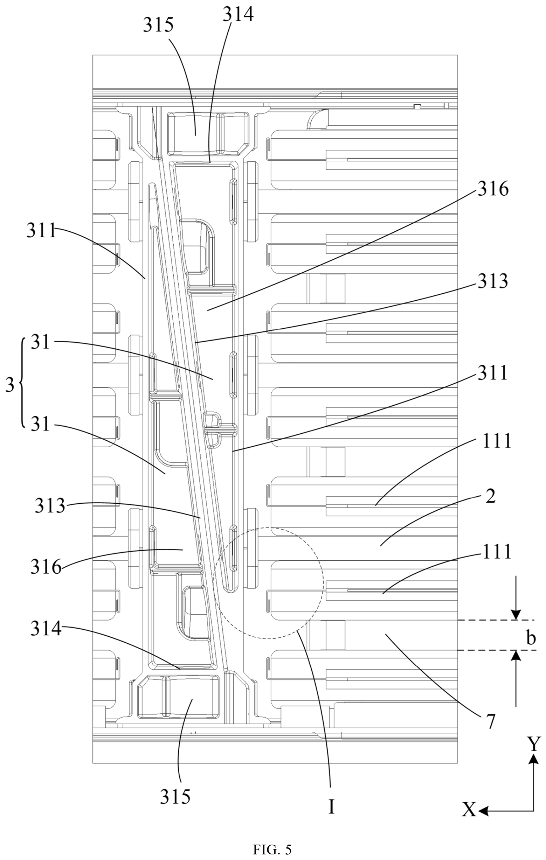

Referring to Figs. 4 and 5, in some embodiments, a first thermally conductive member 7 is disposed between at least two adjacent battery cell units 111 of each of the battery cell assemblies 11. The first thermally conductive member 7 is in thermal contact with the battery cell units 111.

This allows the heat generated by the battery cell unit 111 to be transferred to the first thermally conductive member 7, thereby removing the heat from the battery cell unit 111, avoiding excessive temperature rise of the battery cell unit 111, and further improving the heat dissipation efficiency of the battery cell unit 111.

By way of example, the first thermally conductive member 7 may specifically be a thermally conductive foam. The thermally conductive foam not only facilitates heat transfer from the battery cell unit 111, but, due to its own elasticity, the thermally conductive foam can also cushion the expansion of the battery cell unit 111 when same is expanded during charging and discharging, thereby protecting the battery cell unit 111 to a certain extent, and improving the safety of the battery pack.

In some embodiments, the compression ratio a of the thermally conductive foam may specifically be set to: 20% ≤ a ≤ 80%. By way of example, the compression ratio a may be 20%, 30%, 40%, 50%, 60%, 70%, or 80%.

By setting the compression ratio of the thermally conductive foam within the above-mentioned range, the deformability of the first thermally conductive member 7 is ensured, so that the thermally conductive foam can better match the gap between adjacent battery cell units 111 and better fit against the battery cell units 111, thereby further improving the heat dissipation effect.

In a specific implementation, if the thickness of the first thermally conductive member 7 is set too small, the heat conducting effect will be affected, but if the thickness of the first thermally conductive member 7 is set too large, the thickness of the entire battery cell assembly 11 will be increased, resulting in an excessively large thickness of the battery pack. Based on this, referring to Fig. 5, in some embodiments, the thickness b of the first thermally conductive member 7 in the second direction may specifically be made to satisfy: 0.7 mm ≤ b ≤ 2 mm.

By way of example, the thickness b may specifically be 0.7 mm, 0.8 mm, 0.9 mm, 1.0 mm, 1.1 mm, 1.3 mm, 1.35 mm, 1.5 mm, 1.8 mm, or 2.0 mm.

By setting the thickness of the first thermally conductive member 7 within the above-mentioned range, the heat dissipation effect on the battery cell unit 111 is ensured while ensuring that the battery cell assembly 11 is not excessively thick.

Of course, in other implementations, the first thermally conductive member 7 may also be a thermally conductive adhesive or the like.

In some embodiments, at least two first thermally conductive members 7 are disposed between two adjacent battery cell units 111. The at least two first thermally conductive members 7 are arranged at intervals between the two adjacent battery cell units 111.

This further increases the contact area of the battery cell unit 111 with the first thermally conductive member 7, and further improves the heat dissipation effect.

In a specific implementation, for example, the at least two first thermally conductive members 7 are arranged at intervals between the two adjacent battery cell units 111 in the first direction. For another example, the at least two first thermally conductive members 7 are arranged at intervals between the two adjacent battery cell units 111 in the second direction.

In some embodiments, the battery cell assembly 11 includes at least three battery cell units 111, between two adjacent battery cell units 111 of which the first heat dissipation structure 2 is disposed, and between the other two adjacent battery cell units 111 the first thermally conductive member 7 is disposed.

Such an arrangement improves the overall heat dissipation effect of the battery cell assembly 11. The battery cell unit 111 located in the middle can exchange heat with both the first heat dissipation structure 2 and the first thermally conductive member 7, thereby further improving the heat dissipation efficiency.

For example, for either battery cell assembly 11, the first heat dissipation structure 2 and the first thermally conductive member 7 may be arranged alternately in the second direction.

For example, when the first thermally conductive member 7 is a thermally conductive foam, the above arrangement can cushion the expansion to a certain extent while improving the heat dissipation effect, and protect the battery cell unit 111 and the first heat dissipation structure 2 to a certain extent.

Referring to Fig. 10, in some embodiments, in the second direction, the outer surface of the outermost battery cell unit 111 is provided with a second thermally conductive member 8.

This enables the heat of the outermost battery cell unit 111 to be transferred to the second thermally conductive member 8, further improving the heat dissipation performance of the outermost battery cell unit 111.

In some embodiments, the second thermally conductive member 8 may specifically include: a thermally conductive foam disposed on the outer surface of the battery cell unit 111, and a layer of graphite disposed at least on a side of the thermally conductive foam facing away from the battery cell unit 111.

Due to the good thermal conductivity of graphite, the heat dissipation effect of the battery cell unit 111 is further improved by providing the layer of graphite on the thermally conductive foam.

In some embodiments, the area of a projection of the second thermally conductive member 8 on the outermost battery cell unit 111 is not less than 1/2 of the area of the outer surface of the battery cell unit 111.

This can further guarantee the contact area between the battery cell unit 111 and the second thermally conductive member 8, thereby increasing the heat conducting area and improving the heat dissipation effect on the battery cell unit 111.

Of course, in other implementations, the second thermally conductive member 8 may also be a thermally conductive adhesive or the like.

An embodiment of the present invention also provides a battery pack system including a battery pack.

The specific structure and implementation principle of the battery pack in this embodiment are the same as the battery pack provided in the above embodiments, can bring about the same or similar technical effect, and will not be described in detail herein. Reference can be made specifically to the description of the above embodiments.

The battery pack system may further include an air cooling device. Reference can be made specifically to the description of the above embodiments.

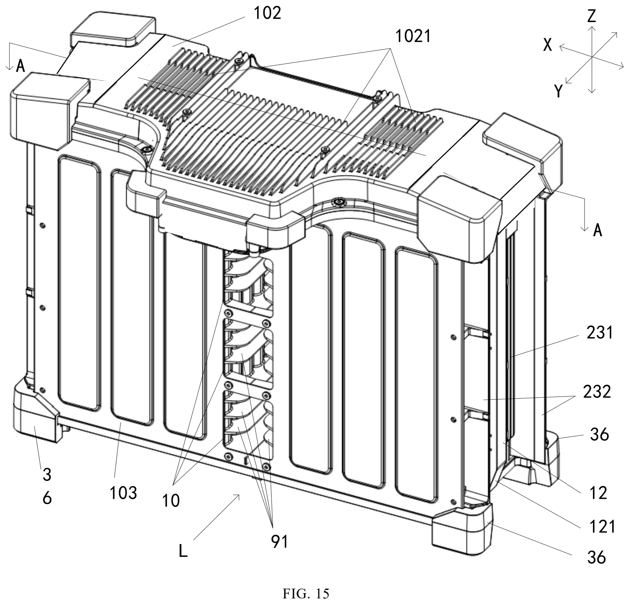

Referring to Fig. 15, an alternative embodiment of the present application provides a battery pack. For example, the battery pack may mean that its internal battery cell is a pouch battery cell. The pouch battery cell refers to a battery cell unit, typically a lithium-ion battery cell, which encapsulates its internal structure using an aluminium-plastic composite film as a battery cell casing. The internal structure of the lithium-ion battery cell includes a positive electrode, a negative electrode, a separator, an electrolyte, etc. In addition, the housing of the battery pack is generally of a hard material. For example, as shown in Fig. 15, the housing of the battery pack includes a first side plate 103 and a second side plate 104 arranged oppositely in a Y-direction, and a third side plate 105 and a fourth side plate 106 arranged oppositely in an X-direction perpendicular to the Y-direction. The first side plate 103 and the second side plate 104 are the major surfaces of the battery pack, and the third side plate 105 and the fourth side plate 106 are the lateral surfaces of the battery pack. The Y-direction is a direction perpendicular to the major surfaces of the battery pack, the X-direction is a direction perpendicular to the lateral surfaces of the battery pack, and the Z-direction is a vertical direction from the top to bottom of the battery. The X-direction, Y-direction, and the Z-direction are perpendicular to one another.

In a specific implementation, a heat sink 9 is provided in the housing of the battery pack, and a plurality of battery cell units 111 are provided on two sides of the heat sink 9, respectively. The heat sink 9 is provided with a plurality of first heat dissipation fins 91, with a first heat dissipation channel being formed between adjacent first heat dissipation fins 91. The heat sink 9 is provided with a plurality of first heat dissipation channels, and the first side plate 103 and the second side plate 104 are each provided with an opening 10 positioned corresponding to and communicating with the respective first heat dissipation channel. A plurality of second heat dissipation fins 231 are provided outside the third side plate 105 and the fourth side plate 106, and a second heat dissipation channel is formed between adjacent second heat dissipation fins 231. An extension direction of the second heat dissipation channel is arranged at an angle to an extension direction of the first heat dissipation channel. For example, a plurality of first heat dissipation fins 91 are arranged side-by-side in the Z-direction, and each of the first heat dissipation fins 91 lies in a plane parallel to an XY plane (i.e., a plane formed by the "X-direction" and the "Y-direction"); and a plurality of second heat dissipation fins 231 are arranged side-by-side in the Y-direction, and each of the second heat dissipation fins 231 lies in a plane parallel to a YZ plane (i.e., a plane formed by the "Y-direction" and the "Z-direction"). The first heat dissipation fin 91 and the second heat dissipation fin 231 are thus perpendicular to each other, and the extension direction of the second heat dissipation channel and the extension direction of the first heat dissipation channel are perpendicular to each other. However, it is not limited to this. In other embodiments, it is also possible that the first heat dissipation fin 91 lies in a plane inclined with respect to the XY plane, and/or that the second heat dissipation fin 231 lies in a plane inclined with respect to the YZ plane, thereby setting the angle between the extension direction of the second heat dissipation channel and the extension direction of the first heat dissipation channel to other degrees, such as 30° or 45° or 60° or 70° or 80° or 85° or any other angle value within the range of 0 to 90°. It is necessary to ensure that the inlet and the outlet of the first heat dissipation channel formed between adjacent first heat dissipation fins 91 are in communication with the openings 10 of the first side plate 103 and the second side plate 104 on two sides of the battery, respectively.

As can be seen, in the battery pack provided by the present application, the heat sink 9 is provided between adjacent battery cell groups inside the battery pack, and the first heat dissipation fin 91 and the first heat dissipation channel of the heat sink 9 can directly dissipate heat from and cool down the inside of the battery pack in a timely manner, thereby avoiding heat accumulation. In addition, a heat dissipation structure, i.e., the second heat dissipation fin 231 and the second heat dissipation channel, is also provided on an outer side surface of the housing of the battery pack, and the second heat dissipation fin 231 and the second heat dissipation channel can dissipate heat from and cool down the battery cell that is far from the heat sink 9 but close to the housing of the battery pack in a timely manner, thereby avoiding heat accumulation. It can be seen that both the inner and outer battery cells of the battery pack provided in the present application can have a good heat dissipation effect.

Further, assuming that the extension direction of the first heat dissipation channel formed by the first heat dissipation fins 91 of the heat sink 9 inside the battery pack is defined as M, and the extension direction of the second heat dissipation channel formed by the second heat dissipation fins 231 on the outer side of the battery pack is defined as N, an airflow direction in the first heat dissipation channel is M, and an airflow direction in the second heat dissipation channel is N. Since the extension direction of the first heat dissipation channel is arranged at an angle to the extension direction of the second heat dissipation channel, M and N are arranged at an angle, that is, the angle between M and N is greater than zero, so that heat of the battery pack can be conducted and dissipated in different directions, thereby avoiding localized overheating of the battery pack.

For example, when the extension direction of the first heat dissipation channel and the extension direction of the second heat dissipation channel are perpendicular to each other (i.e., M and N are perpendicular to each other), it is assumed that the first heat dissipation fin 91 of the heat sink 9 inside the battery pack lies in a plane perpendicular to the first side plate 103 and the second side plate 104, and the second heat dissipation fin 231 on the outer side of the battery pack lies in a plane parallel to the first side plate 103 and the second side plate 104, when an airflow passing through the second heat dissipation channel formed by the second heat dissipation fins 231 is transferred from top to bottom, the temperature of the bottom of the battery cell is relatively high than the temperature of the top of the battery cell, because the airflow gradually absorbs heat and its temperature gradually increases during the transfer. In this case, if the airflow in the heat sink 9 is transferred from the front opening 10 to the rear opening 10 of the battery pack (i.e., in an L direction in Fig. 15), the opening 10 of the first side plate 103 on the front side of the battery pack is an inlet and the temperature of the airflow at the inlet is relatively low, so that the battery cell near this location (including the bottom of the battery cell near this location) has a relatively high heat dissipation efficiency, and the heat of the battery cell can be effectively prevented from being accumulated in this bottom location. Alternatively, in other embodiments, it is also possible that the airflow in the heat sink 9 is transferred from the rear opening 10 to the front opening 10 of the battery pack (i.e., in a direction opposite to the L direction in Fig. 15), the opening 10 of the second side plate on the rear side of the battery pack is an inlet and the temperature of the airflow at the inlet is relatively low, so that the battery cell near this location (including the bottom of the battery cell near this location) has a relatively high heat dissipation efficiency, and the heat of the battery cell can be effectively prevented from being accumulated in this bottom location. It can be seen that in the battery pack according to the embodiment of the present application, the first heat dissipation fin 91 and the second heat dissipation fin 231 arranged at an angle can provide a good heat dissipation effect to the battery cell as a whole, thereby avoiding heat accumulation in the centre of the battery pack and at the bottom of the battery pack.

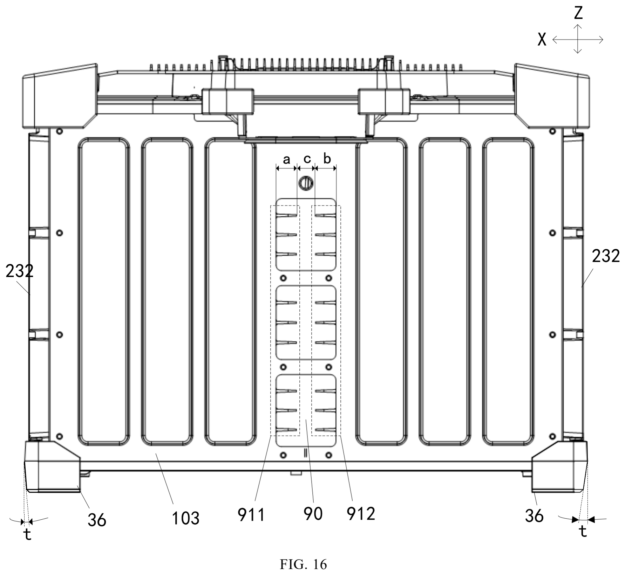

Referring to Fig. 16, in some embodiments, the battery cells in the battery pack described above include a first battery cell group and a second battery cell group arranged side-by-side in the X-direction. The heat sink 9 is provided with a plurality of first heat dissipation fins 91 arranged side-by-side on an inner side surface close to the first battery cell group (i.e., a side surface of the side plate located inside the battery pack and adjacent to the first battery cell group), forming a first heat dissipation fin group 911. The heat sink 9 is provided with a plurality of first heat dissipation fins 91 arranged side-by-side on an inner side surface close to the second battery cell group (i.e., a side surface of the side plate located inside the battery pack and adjacent to the second battery cell group), forming a second heat dissipation fin group 912. A ventilation gap 90 greater than zero exists between the first heat dissipation fin group 911 and the second heat dissipation fin group 912, so that the inside of the heat sink 9 has a sufficient space to meet the large ventilation requirements and achieve a high heat dissipation efficiency. In a specific implementation, the lengths of the first heat dissipation fins 91 of the first heat dissipation fin group 911 and the second heat dissipation fin group 912 and the length of the ventilation gap 90 between the first heat dissipation fin group 911 and the second heat dissipation fin group 912 in the X-direction may be specifically designed according to comprehensive factors such as the battery pack, its power and heat dissipation requirements, and the operation environment. For example, referring to Fig. 16, in some products, assuming that the lengths of the first heat dissipation fins 91 of the first heat dissipation fin group 911 and the second heat dissipation fin group 912 and the length of the ventilation gap 90 between the first heat dissipation fin group 911 and the second heat dissipation fin group 912 in the X-direction are respectively defined as a, b, and c, a may take any value in the range of 5 mm to 20 mm, b may take any value in the range of 5 mm to 20 mm, and c may take any value in the range of 5mm to 20mm. For example, a = b = 13.0 mm or 13.4 mm or 13.6 mm, and c = 12.5 mm or 12.8 mm or 13.0 mm.

In some embodiments, the battery cells of each of the first battery cell group and the second battery cell group are arranged side-by-side in the Y-direction, a side surface of each battery cell close to the heat sink 9 is a first arc-shaped side surface, and a side surface of each battery cell close to the third side plate 105 and the fourth side plate 106 is a second arc-shaped side surface. Correspondingly, referring to Fig. 4, an outer surface of the side plate of the heat sink 9 is provided with a plurality of first grooves 901 which are arranged side-by-side in the Y-direction and adapted to first arc-shaped side surfaces of a plurality of battery cells, and a first thermally conductive adhesive is provided between each of the first grooves 901 and the respective first arc-shaped side surface; and inner walls of the third side plate 105 and the fourth side plate 106 are provided with a plurality of second grooves 230 which are arranged side-by-side in the Y-direction and adapted to second arc-shaped side surfaces of the plurality of battery cells, and a thermally conductive adhesive is provided between each of the second grooves 230 and the respective second arc-shaped side surface. By means of the first arc-shaped side surface and the second arc-shaped side surface, it is possible to avoid the formation of a sharp corner structure of heat concentration on the surface of the battery cell, to avoid the risk of localized high temperature of the battery cell. By means of the first grooves 901 and the and second grooves 230, it is possible to limit and conduct heat from each battery cell, and thus to ensure that each battery cell remain fixed without shaking or displacement, and that a reserved gap is maintained between adjacent battery cells, so that heat can be dissipated evenly on the peripheral side of each battery cell, avoiding the risk of heat accumulation in individual battery cells or in some areas.

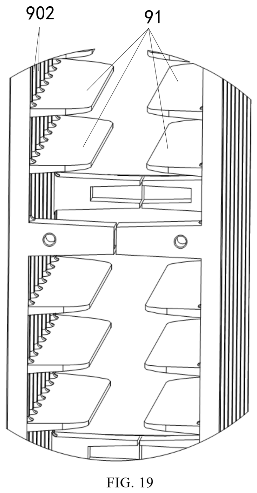

Further, referring to Fig. 19, in some embodiments, the side plate of the heat sink 9 is provided, on a side away from the battery cell, with a plurality of fourth grooves 902 arranged side-by-side in the Y-direction. By means of the fourth groove 902, the structural strength of the side plate of the heat sink 9 can be increased, and the surface area of the inside of the heat sink in contact with the airflow can be increased, thereby facilitating an improvement in the heat dissipation efficiency. Moreover, a root portion of each first heat dissipation fin 91 is adapted to a curved structure formed by the plurality of fourth grooves 902, so that when the first heat dissipation fin 91 is impinged or squeezed by an external force in the Y-direction, the first heat dissipation fin 91 can be supported by a ridge structure (i.e., a sidewall of the fourth groove 902) formed between adjacent fourth grooves 902, and the connection failure of the root portion of the first heat dissipation fin 91 is avoided, thereby facilitating an improvement in the connection stability of the first heat dissipation fin 91 on the side plate of the heat sink 9.

In the battery pack described above, the two openings 10 of the first side plate 103 and the second side plate 104 arranged oppositely are respectively an air inlet and an air outlet, that is, the front and rear sides of the battery pack are respectively an air inlet side and an air outlet side (or the front and rear sides of the battery pack are respectively an air outlet side and an air inlet side). Since the temperature of the air outlet side of the battery pack is higher than the temperature of the air inlet side thereof, in some embodiments, taking the central plane between the first side plate 103 and the second side plate 104 as a dividing plane (i.e., the cross-section A-A in Fig. 15 is the dividing plane), the upper cover 102 of the battery pack is divided into a first top surface region close to the air outlet side and a second top surface region close to the air inlet side. The area of the first top surface region covered by a top heat dissipation fin 1021 is larger than the area of the second top surface region covered by the top heat dissipation fin 1021. Specifically, as shown in Fig. 1, the side of the upper cover 102 that protrudes from the central region is the air outlet side, that is, the opening 10 marked in Fig. 15 is the air outlet. Correspondingly, the relatively flat side of the central region of the upper cover 102 is the air inlet side, that is, the side opposite to the side of the battery pack where the opening 10 is located, as marked in Fig. 1, is the air inlet side. Alternatively, in other embodiments, it is also possible that the side of the upper cover 102 that protrudes from the central region is defined as the air inlet side, that is, the opening 10 marked in Fig. 15 is the air inlet. Correspondingly, the relatively flat side of the central region of the upper cover 102 is the air outlet side, that is, the side opposite to the side of the battery pack where the opening 10 is located, as marked in Fig. 15, is the air outlet side.

The embodiments of the present application also provide an electrical device, including a main body and a battery pack as described above. The main body is provided with a battery compartment for mounting the battery pack, and an opening and an inner cavity of the battery compartment have dimensions in both the Y-direction at certain locations and the X-direction at certain locations within any XY cross-section that are slightly larger than those of the battery pack at the corresponding positions, so that a reserved gap capable of forming a heat dissipation channel is provided between an inner wall of the battery compartment and the battery pack, ensuring that ventilation and heat dissipation can be performed on the peripheral side of the battery pack by means of this reserved gap.

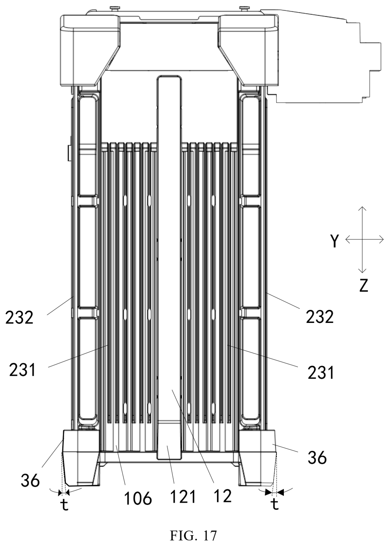

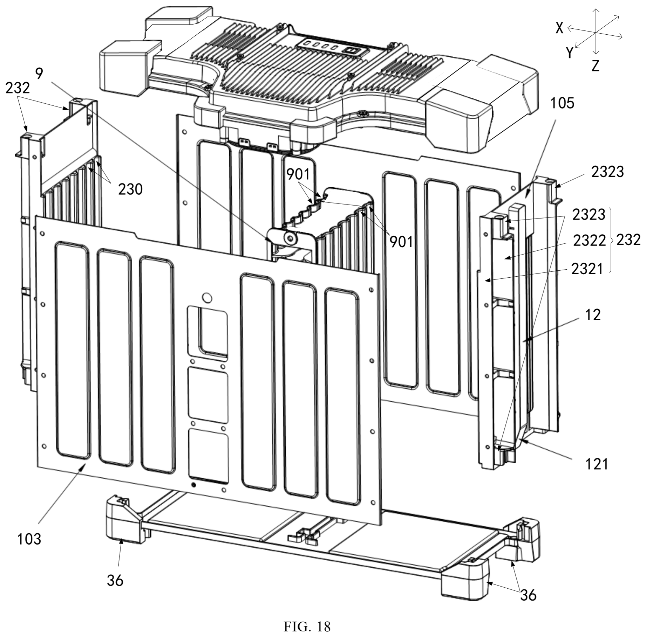

Referring to Figs. 15 and 17, in some embodiments, bosses 232 are provided at front and rear ends of an outer side surface of each of the third side plate 105 and the fourth side plate 106, respectively. The bosses 232 can position and protect the peripheral corners of the battery pack. Specifically, the protrusion height of the boss 232 on the third side plate 105 and the fourth side plate 106 is greater than the protrusion height of the second heat dissipation fin 231 on the third side plate 105 and the fourth side plate 106. Moreover, preferably, a main portion of the boss 232 is of a plate-like structure having a weight-reducing effect. Specifically, referring to Fig. 18, Z-direction side edges of the outer side surface of each of the third side plate 105 and the fourth side plate 106 at the front and rear ends are each provided with the boss 232, and the protrusion height of the boss 232 on the third side plate 105 and the fourth side plate 106 is greater than the protrusion height of the second heat dissipation fin 231 on the third side plate 105 and the fourth side plate 106. The boss 232 includes a root portion 2321, a plate portion 2322, and end portions 2323. The root portion 2321 is integrally connected to the outer side surface of a respective one of the third side plate 105 and the fourth side plate 106, and the root portion 2321 is connected to a respective one of the first side plate 103 and the second side plate 104 via a fastener. The plate portion 2322 is located on a side of the root portion 2321 away from the respective one of the third side plate 105 and the fourth side plate 106 and is connected to the root portion 2321. The end portions 2323 are located on the side of the root portion 2321 away from the respective one of the third side plate 105 and the fourth side plate 106 and are connected to the root portion 2321, and the end portions 2323 include a first end portion located at a Z-direction top end of the plate portion 2322, and a second end portion located at a Z-direction bottom end of the plate portion 2322. The first end portion is connected to the upper cover 102 of the battery pack, and the second end portion is connected to the bottom plate 107 of the battery pack. It can be seen that the plate body structure (i.e., the plate portion 2322) of the boss 232 can provide a weight-reducing effect while the strength of the fastening connection between the third side plate 105 and the fourth side plate 106, and the first side plate 103 and the second side plate 104 can be ensured by means of the root portions 2321, and the strength of the fastening connection between the third side plate 105 and the fourth side plate 106, and the upper cover 102 and the bottom plate 107 can be ensured by means of the end portions 2323.

Correspondingly, the inner wall of the battery compartment is non-planar to adapt to the contours of the third side plate 105 and the fourth side plate 106. Since a reserved gap capable of forming a heat dissipation channel is provided between the inner wall of the battery compartment and the battery pack, a gap greater than zero exists between the inner wall of the battery compartment and either of the third side plate 105 and the fourth side plate 106. Based on this, in order to improve the positioning effect of the battery pack within the battery compartment, a vertical guide rail 12 capable of abutting against the inner wall of the battery compartment is further provided outside each of the third side plate 105 and the fourth side plate 106 of the battery pack. The plurality of second heat dissipation fins 231 are respectively disposed on two sides of the vertical guide rail 12, and the protrusion height of the vertical guide rail 12 on the third side plate 105 and the fourth side plate 106 is greater than the protrusion height of the second heat dissipation fins 231 on the third side plate 105 and the fourth side plate 106, and less than the protrusion height of the boss 232 on the third side plate 105 and the fourth side plate 106. In this way, when the battery pack is mounted into the battery compartment, the battery pack can abut against the inner wall of the battery compartment via the vertical guide rail 12. Moreover, by means of the vertical guide rail 12, the structural strength of the third side plate 105 and the fourth side plate 106 can be increased, the fitting accuracy of the battery and a side wall of the battery compartment is guaranteed, and heat can also be transferred directly to the battery compartment, resulting in high heat dissipation efficiency.

In some embodiments, the bottom of the vertical guide rail 12 is provided, on a side facing the inner wall of the battery compartment, with a bevelled surface 121 of a gradually thinner thickness. It can be seen that the guide function can be performed by the bevelled surface 121 when the battery is mounted into the battery compartment. In addition, after the battery is fully mounted in the battery compartment, an airflow channel in communication with the second heat dissipation channel is formed between the bevelled surface 121 and the bottom of the side wall of the battery compartment, thereby facilitating uniform heat dissipation around the battery.

Referring to Figs. 16 and 17, in some embodiments, spacers 36 are provided at bottom corners of the housing of the battery pack. Moreover, a bottom surface of the spacer 36 is closer to a bottom wall of the battery compartment than a bottom surface of the housing of the battery, and a side surface of the spacer 36 is closer to the side wall of the battery compartment than a side surface of the housing of the battery. Further, in some embodiments, a bevelled angle is provided in a lower region of the side surface of the spacer 36. Specifically, the bevelled angle means that the lower region of the outer side surface of the spacer 36 has an angle t of inclination greater than zero with respect to the vertical surface, where t preferably takes any value in the range of 10° to 45°, such as 10°, or 12°, or 15°, or 17°, or 20°, or 30°, or 32°, or 45°. By means of the bevelled angle, weight reduction can be facilitated, and the bevelled angle enables an airflow channel in communication with the second heat dissipation channel to be formed between the spacer 36 and the side wall of the battery compartment, thereby forming airflow channels in communication with each other at the bottom of the battery and on its peripheral side, so that the airflow channels on the front, rear, left and right sides of the battery and at the bottom of the battery are in communication with each other, resulting in a uniform flow effect and preventing localized overheating of the battery.

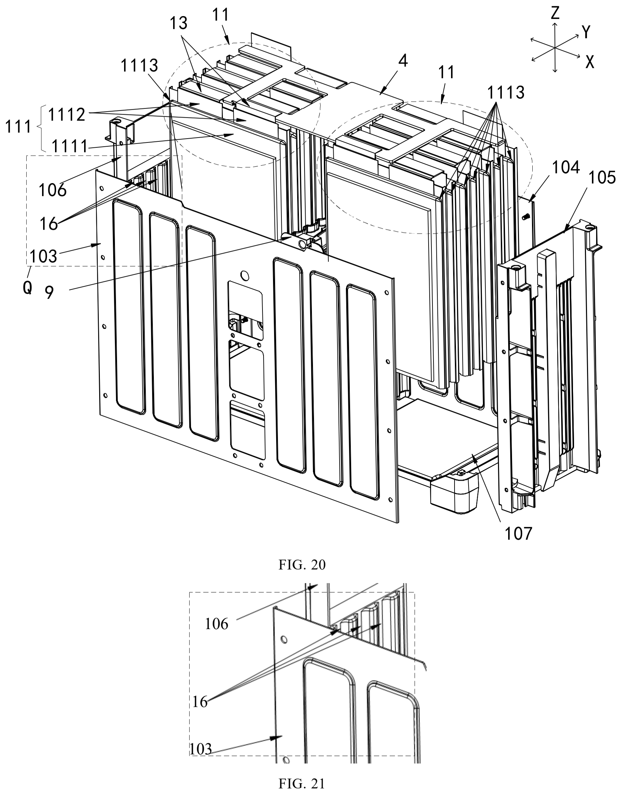

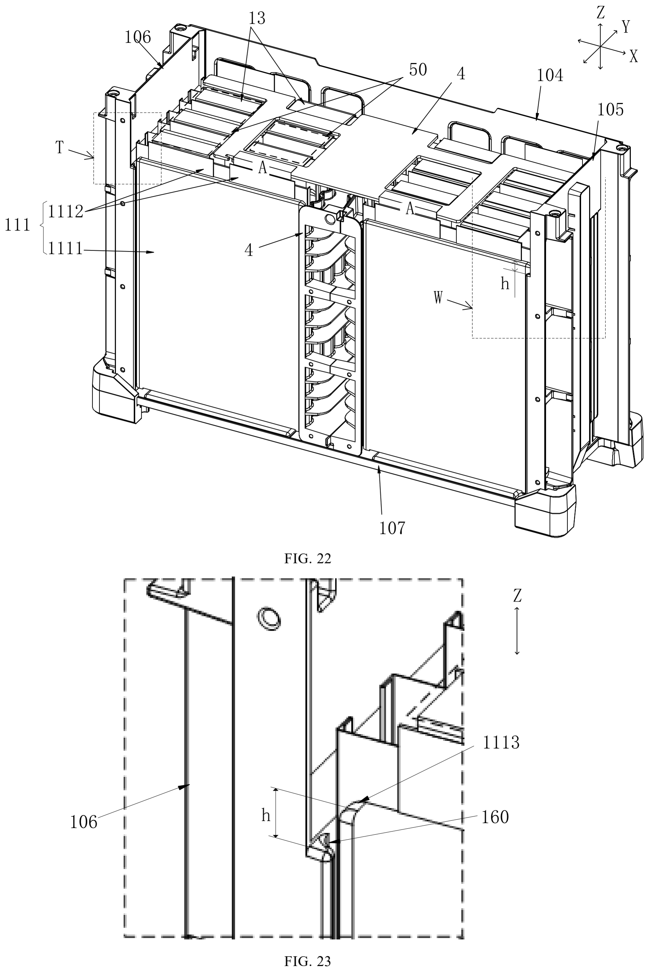

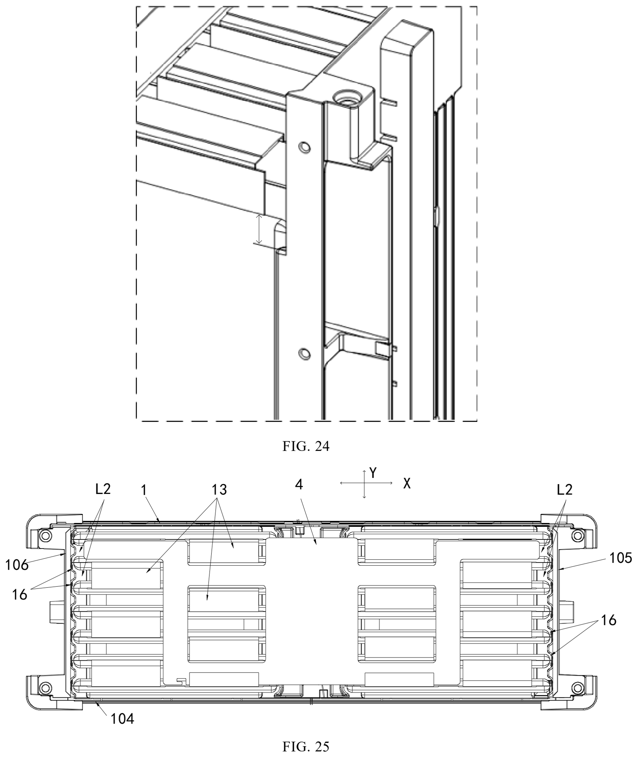

Referring to Fig. 20, two or more battery cell assemblies 11 arranged side-by-side in the X-direction are disposed within the housing of the battery pack according to the embodiments of the present application, and each of the battery cell assemblies 11 is provided with a plurality of battery cell units 111 arranged side-by-side in the Y-direction. A first heat dissipation gap (i.e., the position of a cavity where the heat sink 9 is located as shown in Figs. 20 and 22) is provided between adjacent battery cell assemblies 11, and a second heat dissipation gap (i.e., the Y-direction heat dissipation channel L1 as shown in Fig. 7) is provided between adjacent battery cell units 111. Moreover, as shown in Fig. 25, inner walls of the third side plate 105 and the fourth side plate 106 are each provided with a plurality of Z-direction ridges arranged side-by-side in the Y-direction, a third groove 16 is formed between adjacent Z-direction ridges, and each side sealing edge of each of the battery cell units 111 is located in one third groove 16 and is fixedly connected to a respective one of the third side plate 105 and the fourth side plate 106 via a thermally conductive adhesive. A side sealing edge top R-corner 1113 of each of the battery cell units 111 is located outside a top opening 160 of the third groove 16.

It should be noted here that the term "side sealing edge top R-corner" in the present application means that a smooth transition region with a certain radius is designed at the junction between the side edge and the top edge of the battery cell unit 111 during the packaging of the battery pack. Such a design not only affects the appearance of the battery pack, but also has a significant influence on the functionality and safety of the battery pack in many aspects. For example, compared to sharp right-angled edges, the R-corner structure can disperse stress, reduce stress concentration, and avoid material breakage or crack propagation when subjected to external shock or pressure. Moreover, the smooth R-corner structure can help to achieve a better sealing effect, prevent electrolyte leakage, and reduce the risk of scratching other assemblies or the human body during assembly at the corners of the battery cell. In addition, it should be noted that the term "top opening 160 of the third groove 16" in the present application means that among the plurality of third grooves 16 arranged side-by-side along the vertical direction (i.e., the Z-direction shown in Fig. 1) on the inner walls of the third side plate 105 and the fourth side plate 106, each third groove 16 is a vertical through groove, and its top end is an opening structure similar to a U-shape (or an isosceles trapezoid in cross-section). Therefore, in the present application, "the side sealing edge top R-corner 1113 of the battery cell unit 111 is outside the top opening 160 of the third groove 16" means that the side sealing edge of the battery cell unit 111 is located inside the third groove 16, but the top end of the side sealing edge protrudes beyond the top opening 160 of the third groove 16. Specifically, referring to Figs. 22 to 24, the side sealing edge of the battery cell unit 111 protrudes beyond the top opening 160 of the third groove 16, with a protrusion distance h greater than zero. That is, the distance h between the side sealing edge top R-corner 1113 of the battery cell unit 111 and the top opening 160 of the third groove 16 is greater than zero. In a specific implementation, h may take any value in the range of 5 mm to 10 mm.

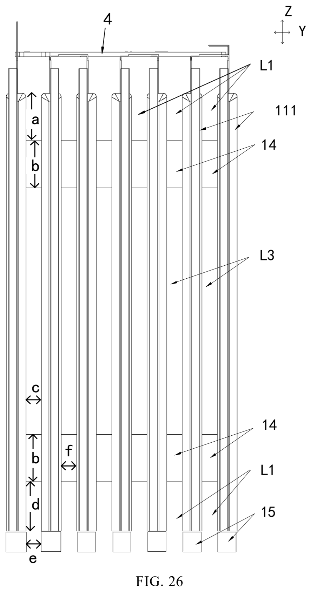

By means of the third grooves 16, it is possible to limit and conduct heat from each battery cell unit 111, so that each battery cell unit 111 can remain fixed in the housing of the battery without shaking or displacement, thereby helping to ensure that a reserved gap (including the second heat dissipation gap described above, specifically the Y-direction heat dissipation channel L1 shown in Fig. 7) is maintained between adjacent battery cell units 111. By means of this reserved gap, heat can be dissipated evenly on the peripheral side of each battery cell unit 111, avoiding the risk of high temperature caused by heat accumulation in individual battery cells or in some areas. Furthermore, since the region where the side sealing edge top R-corner 1113 of each battery cell unit 111 is located outside the third grooves 16 of the inner walls of the third side plate 105 and the fourth side plate 106, that is, the top ends of the Z-direction ridges on the inner walls of the third side plate 105 and the fourth side plate 106 are lower than the position of the side sealing edge top R-corner 1113 of the battery cell unit 111 (i.e., h is greater than zero in Figs. 22 to 24). This can avoid the problem of the Z-direction ridges on the inner walls of the third side plate 105 and the fourth side plate 106 being too high, which would affect the fitting of a top cover of the battery pack. Moreover, the side sealing edge top R-corner 1113 of each battery cell unit 111 is located in the second heat dissipation gap described above (specifically the Y-direction heat dissipation channel L1 shown in Fig. 26), and is in contact with air in the second heat dissipation gap, so that heat can be dissipated from the side sealing edge top R-corner 1113 by means of both the air in the internal cavity of the battery pack (i.e., the cavity inside the battery pack that is not occupied by the battery cell units 111 and other parts and components, the second heat dissipation gap being part of the cavity) and the third side plate 105 and the fourth side plate 106, thereby helping to ensure the heat dissipation efficiency in the region where the side sealing edge top R-corner is located, avoiding the risk of high temperature resulting from heat concentration in this region, and ultimately achieving the purpose of improving the safety performance and life of the battery pack and ensuring its safe operation.

Referring to Figs. 21 and 25, in some embodiments, the cross-section of the third groove 16 is arc-shaped or polygonal. Specifically, the polygonal shape refers to a bent shape formed by connecting multiple line segments in sequence, similar to an arc. In a specific implementation, the arc-shaped inner wall (or the polygonal inner wall) of the third groove 16 is adapted to the shape of the arc-shaped side sealing edge of the battery cell unit 111 and is bonded to the side sealing edge via a thermally conductive structural adhesive. Further, the side sealing edge top R-corner 1113 described above is also bonded to each of the inner walls of the third side plate 105 and the fourth side plate 106 via a thermally conductive structural adhesive. In this way, the third side plate 105 and the fourth side plate 106 enable the positioning and heat conduction of the plurality of battery cell units 111. The thermally conductive structural adhesive can not only enable the heat of the battery cell unit 111 to be transferred to the third side plate 105 and the fourth side plate 106 for heat dissipation and cooling, but can also bond the side sealing edge of the battery cell unit 111 and its top R-corner, thereby improving the sealing strength at the side sealing edge and its top R-corner, avoiding the risk of adhesive failure or electrolyte leakage in this location, and improving the safety of the battery pack.

Referring to Fig. 26, in some embodiments, a first foam 14 is provided between adjacent battery cell units 111. A projection of the first foam 14 in the Y-direction is located within a side surface of the battery cell unit 111, and an edge of the projection has a spacing greater than zero from an edge of the side surface of the battery cell unit 111. Specifically, in the Z-direction parallel to the XY plane (i.e., the plane formed by the X-direction and the Y-direction), each end of the first foam 14 has a spacing greater than zero from a respective end of a cell body 1111 of the battery cell unit 111. Specifically, the Z-direction length of the first foam 14 is less than the Z-direction length of the battery cell unit 111. Moreover, in the Z-direction, a top end of the first foam 14 has a spacing greater than zero from the top sealing edge of the battery cell unit 111, and a bottom end of the first foam 14 has a spacing greater than zero from a bottom end of the battery cell unit 111. This results in the Y-direction heat dissipation channel L1 shown in Fig. 7. Similarly, in the X-direction, the first foam 14 has a spacing greater than zero from a respective one of the third side plate 105 and the fourth side plate 106. Moreover, in the X-direction, the Y-direction length of the first foam 14 is less than the Y-direction length of the battery cell unit 111, and each side of the first foam 14 has a spacing greater than zero from a respective side of the cell body 1111 of the battery cell unit 111. This results in the Z-direction heat dissipation channel L2 shown in Fig. 6. In this way, the first foam 14 enables a heat dissipation channel unobstructed by the foam to be formed between adjacent battery cell units 111 at least in the region of an edge of a side surface of the cell body 1111, so that heat of the peripheral side edge of the side surface of the battery cell unit 111 can be transferred through this heat dissipation channel, thereby facilitating an improvement in the heat dissipation efficiency of each battery cell unit, and helping to avoid the risk of high temperature caused by localized heat concentration of the battery cell.

In some embodiments, in order to meet the lightweight requirements of the battery pack, the volume of the first foam 14 is as small as possible, so that two or more pieces of first foam 14 may be provided at intervals between adjacent battery cell units 111. For example, referring to Fig. 26, in the Z-direction parallel to the XY plane, two pieces of first foam 14 are provided at intervals between adjacent battery cell units 111. One piece of first foam 14 is close to the top sealing edge of the battery cell unit 111 and maintains a preset distance greater than zero from the top sealing edge, and the other piece of first foam 14 is close to the bottom of the battery cell unit 111 and maintains a preset distance greater than zero from the bottom. An intermediate heat dissipation channel L3 shown in Fig. 7 is thus formed between the two pieces of first foam 14. The intermediate heat dissipation channel L3 is in communication with the Y-direction heat dissipation channel L1 through the Z-direction heat dissipation channel L2, so that the cavities on the outer and peripheral sides of the side surface of each battery cell unit 111 are in communication with each other, thereby facilitating uniform heat dissipation inside the battery pack, and avoiding localized heat concentration of the battery cell.

Referring to Fig. 26, in some embodiments, the bottom of each battery cell unit 111 is further provided with a second foam 15. In the Y-direction, a spacing greater than zero exists between adjacent pieces of second foam 15; and/or in the X-direction, each end of the second foam 15 has a spacing greater than zero from a respective end of the cell body 1111 of the battery cell unit 111. That is, a plurality of pieces of second foam 15 are disposed at intervals and correspond to the battery cell units 111 on a one-to-one basis, thereby forming bottom heat dissipation channels that can communicate with each other around bottom side sealing edges of the battery cell units 111, thereby facilitating uniform heat dissipation inside the battery pack, and avoiding localized heat concentration of the battery cell.

In a specific implementation, the dimensions of each of the first foam 14 and the second foam 15 may be designed according to actual requirements. For example, referring to Fig. 7, in some embodiments, in the Z-direction, the distance between the top of the first foam 14 and the top of the cell body 1111 of the battery cell unit 111 is defined as a, where a may be any value in the range of 10 mm to 30 mm, for example, a = 15 mm, or 16.8 mm, or 20 mm, or 22.2 mm, or 25 mm, etc.; the height dimension of each first foam 14 is defined as b, where b may be any value in the range of 10 mm to 30 mm, for example, b = 15 mm, or 16.8 mm, or 20 mm, or 22.2 mm, or 25 mm, etc.; and the distance between the bottom of the first foam 14 and the bottom of the cell body 1111 of the battery cell unit 111 is defined as d, where d may be any value in the range of 10 mm to 30 mm, for example, d = 15 mm, or 15.8 mm, or 20 mm, or 22.2 mm, or 25 mm, etc. Moreover, in the Y-direction, the thickness dimension of the first foam 14 is defined as f, where f may be any value in the range of 2 mm to 20 mm, for example, f = 5 mm, or 5.8 mm, or 7 mm, or 7.2 mm, or 7.5 mm, or 8.1 mm, or 9 mm, or 10 mm, etc.; and the spacing between adjacent pieces of second foam 15 is defined as e, where e may be any value in the range of 2 mm to 20 mm, for example, e = 5 mm, or 5.8 mm, or 7 mm, or 7.2 mm, or 7.5 mm, or 8.1 mm, or 9 mm, or 10 mm, etc.

In summary, in the battery pack according to the embodiments of the present application, the peripheries of the battery cell units 111 are spaced apart by the foam, so that a heat dissipation gap is reserved between adjacent battery cell units 111. The heat dissipation gap enables the surrounding space of each battery cell unit 111 to communicate and conduct heat, thereby facilitating uniform heat dissipation inside the battery pack. For example, when the temperature of a certain localized location of a battery cell is high, the heat dissipation gap enables excess heat generated at that location to be conducted through the air surrounding the battery cell in a timely manner, and the heat to be transferred to the other gap locations to be dissipated through the heat sink 9 or the housing of the battery pack. The side sealing edge top R-corner region of the cell body 1111 of each battery cell unit 111, although not in direct contact with the third side plate 105 and the fourth side plate 106, is located in the heat dissipation gap, so that heat can be transferred to the surrounding regions with relatively lower temperatures, achieving good heat dissipation efficiency.

Referring to Figs. 20, 22 and 25, the battery pack according to the embodiments of the present application is also provided with a circuit board 4 on the top of the battery cell assembly 11. Specifically, the circuit board 4 may be a PCB (Printed Circuit Board, which is also known as a printed wiring board). At least part of a tab 1112 of a battery cell unit 111 and at least part of a tab of a battery cell unit 111 adjacent thereto form an electrically conductive connection portion 13 by means of a lap weld, so that the plurality of battery cell units 111 of the battery cell assembly 11 are sequentially connected in series or in parallel. Moreover, in each battery cell assembly 11, the tab of the outermost battery cell unit 111 is conductively connected to a busbar, specifically, referring to location A in Fig. 22. In addition, the circuit board 4 is provided with a clearance notch 50 which can expose the electrically conductive connection portion 13. Each electrically conductive connection portion 13 is connected to the circuit board 4 near the clearance notch 50 via a nickel plate. The clearance notch 50 can reduce the coverage area and volume of the circuit board 4, eliminate the need for a large-area tab bracket, provide a more unobstructed exhaust channel at the top of the battery cell, and improve the heat dissipation efficiency.

The embodiments of the present application also provide an electrical device provided with a battery pack as described above. The battery pack may be used as a power supply or an energy storage unit of the electrical device. In a specific implementation, the electrical device may be an electric vehicle (e.g., a pure electric vehicle or a hybrid electric vehicle), a household appliance, a smart device, an unmanned aerial vehicle, a charging device, an electric bicycle, an electric motorcycle, etc. The present application does not specifically limit the type of the electrical device, which may be any device capable of using the battery pack.

It is to be understood that the above embodiments may be combined to obtain other embodiments provided that no conflict occurs. Such combination may be a combination of the embodiments, or a combination of one or more technical features of the embodiments.

In the description, it should be noted that, unless expressly stated and defined otherwise, the terms "mounted", "connected", and "connection" should be understood in a broad sense, for example, it may be a fixed connection, or an indirect connection through an intermediate medium, and may be the communication between the interiors of two elements or the interaction between two elements. For those of ordinary skill in the art, the specific meaning of the terms mentioned above in the present application should be construed according to specific circumstances. In addition, orientation or position relationships indicated by the terms such as "up", "down", "left", "right", "front", "rear", "vertical", "horizontal", "top", "bottom", "inside", and "outside" are based on orientation or position relationships shown in the accompanying drawings and are merely for ease of description of the present application and simplification of the description, rather than indicating or implying that the apparatuses or elements referred to must have a specific orientation or be constructed and operated in a specific orientation, and therefore cannot be construed as limiting the present application.

In the description, relationship terms such as "first" and "second" are merely used to distinguish an entity or operation from another entity or operation, and do not necessarily require or imply that any such actual relationship or order exists between those entities or operations. Moreover, the terms "include", "comprise", or any other variations thereof are intended to cover non-exclusive inclusion, so that a process, method, article, or device that includes a series of elements not only includes those elements but also includes other elements not specifically listed, or elements inherent to such a process, method, article, or device. Without further limitation, an element defined by the phrase "including a..." does not exclude the presence of additional identical elements in the process, method, article, or device that includes the element.

The above descriptions are merely preferred embodiments of the present invention but not intended to limit the present invention, and any modifications, equivalent replacements, etc. made within the principle of the present invention should be included within the scope of protection of the present invention.

## Claims

1. A battery pack, **characterized by** comprising a battery module (1), first heat dissipation structures (2), and a second heat dissipation structure (3), wherein
the battery module (1) comprises at least two battery cell assemblies (11) arranged in a first direction (X); the battery cell assembly (11) comprises at least two battery cell units (111) arranged in a second direction (Y);
the first heat dissipation structure (2) is disposed between at least two adjacent battery cell units (111) of each of the battery cell assemblies (11); and
the second heat dissipation structure (3) is disposed between two adjacent battery cell assemblies (11), and the second heat dissipation structure (3) has a second heat dissipation channel (30) in communication with the outside.

2. The battery pack according to claim 1, **characterized in that** the first heat dissipation structure (2) has a first heat dissipation channel (20) in communication with the outside; and the first heat dissipation channel (20) is in communication with the second heat dissipation channel (30).

3. The battery pack according to claim 2, **characterized in that** the second heat dissipation structure (3) comprises two brackets (31) arranged in the first direction (X) and connected to each other in a mating manner, wherein the brackets (31) correspond to the battery cell assemblies (11) on a one-to-one basis, and each of the brackets (31) is connected to the first heat dissipation structure (2) in the corresponding the battery cell assembly (11); and the two brackets (31)jointly define the second heat dissipation channel (30).

4. The battery pack according to claim 3, **characterized in that** the bracket (31) is provided with a ventilation opening (310); and
one end of the first heat dissipation channel (20) is in communication with the outside, the other end of the first heat dissipation channel (20) is in communication with the ventilation opening (310), and the ventilation opening (310) is in communication with the second heat dissipation channel (30).

5. The battery pack according to claim 3 or 4, **characterized by** further comprising a circuit board (4) located on one side of the battery module (1) in a third direction, wherein
a side of the bracket (31) facing the circuit board (4) is provided with a potting cavity (316) opening toward the circuit board (4), and the bracket (31) is provided with a potting hole (315) in communication with the potting cavity (316); further,
the bracket (31) comprises a main portion (311) and a first mating portion (312); the first mating portion (312) is disposed on one side of the main portion (311) in the first direction (X);
the first mating portion (312) comprises an inclined wall (313) and an end wall (314), one end of the inclined wall (313) being connected to the main portion (311), the other end of the inclined wall (313) extending obliquely in a direction away from the main portion (311), and the end wall (314) being connected between the other end of the inclined wall (313) and the main portion (311);
the inclined wall (313), the end wall (314) and the main portion (311) jointly define the potting cavity (316), and the potting hole (315) is provided in the end wall (314); and
the inclined walls (313) of the two brackets (31) fit against each other, and the end walls (314) of the two brackets (31) are oppositely disposed in the second direction (Y).

6. The battery pack according to any one of claims 3 to 5, **characterized in that** the bracket (31) comprises a main portion (311) and a first mating portion (312); the first mating portion (312) is disposed on one side of the main portion (311) in the first direction (X); and
the first mating portion (312) comprises an inclined wall (313) and an end wall (314), wherein one end of the inclined wall (313) is connected to the main portion (311), the other end of the inclined wall (313) extends obliquely toward a direction away from the main portion (311), and the end wall (314) is connected between the other end of the inclined wall (313) and the main portion (311); and
the inclined walls (313) of the two brackets (31) fit against each other, and the end walls (314) of the two brackets (31) are oppositely disposed in the second direction (Y).

7. The battery pack according to claim 6, **characterized in that** the main portion (311) is connected to the first heat dissipation structure (2);
the main portion (311) is provided with a ventilation opening (310), one end of the first heat dissipation channel (20) is in communication with the outside, the other end of the first heat dissipation channel (20) is in communication with the ventilation opening (310), and the ventilation opening (310) is in communication with the second heat dissipation channel (30); and
the main portion (311) is of a plate-like structure.

8. The battery pack according to claim 6 or 7, **characterized in that** the bracket (31) comprises two first mating portions (312) disposed at two ends of the main portion (311) in a third direction;
projections of the inclined walls (313) of the two first mating portions (312) intersect in the third direction; further
the bracket (31) further comprises a second mating portion (317), the second mating portion (317) and the first mating portions (312) being disposed on the same side of the main portion (311) in the first direction (X), and the second mating portion (317) being located between the two first mating portions (312) in the third direction; and the second mating portions (317) of the two brackets (31) fit against each other.

9. The battery pack according to any one of claims 2 to 8, **characterized in that** the first heat dissipation structure (2) comprises:
a hollow heat dissipation plate (21), the heat dissipation plate (21) being located between two adjacent battery cell units (111); an inner cavity of the heat dissipation plate (21) is formed as at least a part of the first heat dissipation channel (20); further
the first heat dissipation structure (2) further comprises two end plates (22), the two end plates (22) being respectively disposed at two ends of the heat dissipation plate (21) in the first direction (X), and located outside the battery cell unit (111) in the first direction (X); and
the end plate (22) is provided with a through hole (221), and an end portion of the heat dissipation plate (21) is inserted into the through hole (221).

10. The battery pack according to claim 1, **characterized by** comprising a housing (100) and a plurality of battery cell units (111) disposed within the housing (100), the housing (100) comprising a first side plate (103) and a second side plate (104) arranged oppositely in the second direction (Y), and a third side plate (105) and a fourth side plate (106) arranged oppositely in the first direction (X) perpendicular to the second direction (Y), wherein
the second heat dissipation structure (3) is a heat sink (9) disposed within the housing (100), and the plurality of battery cell units (111) are disposed on two sides of the heat sink (9), respectively; a plurality of first heat dissipation fins (91) are provided in the heat sink (9), and the second heat dissipation channel (20) is formed between adjacent first heat dissipation fins (91); the first side plate (103) and the second side plate (104) are provided with an opening (10) in communication with the second heat dissipation channel (20);
the first heat dissipation structure (2) is formed by a plurality of second heat dissipation fins (231) disposed outside the third side plate (105) and the fourth side plate (106), and a first heat dissipation channel (20) is formed between adjacent second heat dissipation fins (231); and an extension direction of the first heat dissipation channel (20) is arranged at an angle to an extension direction of the second heat dissipation channel (30).

11. The battery pack according to claim 10, **characterized in that** the plurality of first heat dissipation fins (91) are arranged side-by-side in a Z-direction perpendicular to an XY plane, each of the first heat dissipation fins (91) lies in a plane parallel to the XY plane; and/or
the plurality of second heat dissipation fins (231) are arranged side-by-side in the second direction (Y), and each of the second heat dissipation fins (231) lies in a plane parallel to a YZ plane.

12. The battery pack according to claim 11, **characterized in that** the at least two battery cell assemblies (11) comprise a first battery cell assembly (11) and a second battery cell assembly (11) arranged side-by-side in the first direction (X);
the heat sink (9) is provided with a plurality of first heat dissipation fins (91) arranged side-by-side on an inner side surface close to the first battery cell assembly (11), forming a first heat dissipation fin group (911);
the heat sink (9) is provided with a plurality of first heat dissipation fins (91) arranged side-by-side on an inner side surface close to the second battery cell assembly group (11), forming a second heat dissipation fin group (912); and
a ventilation gap (90) greater than zero exists between the first heat dissipation fin group (911) and the second heat dissipation fin group (912).

13. The battery pack according to claim 1, **characterized by** comprising a housing (100), the housing (100) comprising a first side plate (103) and a second side plate (104) arranged oppositely in the second direction, and a third side plate (105) and a fourth side plate (106) arranged oppositely in the first direction (X) perpendicular to the second direction, wherein the at least two battery cell assemblies (11) arranged side-by-side in the first direction are disposed within the housing (100), and each of the battery cell assemblies (11) is provided with a plurality of battery cell units (111) arranged side-by-side in the second direction (Y); the second heat dissipation structure (3) is a first heat dissipation gap provided between adjacent battery cell assemblies (11), and the first heat dissipation structure (2) is a second heat dissipation gap provided between adjacent battery cell units (111); and
inner walls of the third side plate (105) and the fourth side plate (106) are each provided with a plurality of Z-direction ridges arranged side-by-side in the second direction (Y), a third groove (16) is formed between adjacent Z-direction ridges, each side sealing edge of each of the battery cell units (111) is located in one third groove (16), and a side sealing edge top R-corner (1113) of each of the battery cell units (111) is located outside a top opening (160) of the third groove (16).

14. The battery pack according to claim 13, **characterized in that** a distance between the side sealing edge top R-corner (1113) and the top opening (160) of the third groove (16) in the Z-direction parallel to an XY plane is defined as h, where h satisfies: 5 mm ≤ h ≤ 10 mm; further
the side sealing edge top R-corner (1113) is bonded to each of the inner walls of the third side plate (105) and the fourth side plate (106) via a thermally conductive structural adhesive.

15. An electrical device, **characterized in that** the electrical device is provided with a battery pack of any one of claims 1 to 14.
